# FASCICULE DE BREVET EUROPEEN

(11) **EP 1 461 242 B1**
(45) Date de publication et mention de la délivrance du brevet: **29.12.2010**
(21) Numéro de dépôt: 02770144.0
(22) Date de dépôt: 30.08.2002
(51) Int. Cl.: B63C 9/00

(54) **SYSTEME DE SECURITE EN MER PERMETTANT DE LOCALISER AVEC PRECISION UN NAUFRAGE**
MEERESSICHERHEITSVORRICHTUNG ZUR GENAUEN LOKALISIERUNG VON ÜBER BORD GEFALLENEN SEGLERN
SAFETY SYSTEM AT SEA FOR ACCURATELY LOCATING A SHIPWRECKED NAVIGATOR

(30) Priorité: 30.08.2001 FR 0111768
(43) Date de publication de la demande: 29.09.2004
(73) Titulaire: Bruno, Marcel, 83310 Grimaud (FR)
(72) Inventeur: BRUNO, Marcel, 83310 Grimaud (FR); PILARD, Patrick, 83120 Sainte Maxime (FR); POTIRON, Patrick, 85520 Jard sur Mer (FR); VALENTINO, Jean-Claude, 85440 Talmont Saint Hilaire (FR)
(74) Mandataire: Decobert, Jean-Pascal
(86) Numéro de dépôt international: PCT/IB2002/003873
(87) Numéro de publication internationale: WO 2003/018398

(56) Documents cités:
- DE-A- 4 124 831
- DE-A- 19 638 017
- DE-U- 29 618 254
- FR-A- 2 062 221
- FR-A- 2 637 713
- FR-A- 2 695 904
- US-A- 6 150 928
- US-B1- 6 222 484
- PATENT ABSTRACTS OF JAPAN vol. 1999, no. 04, 30 avril 1999 (1999-04-30) & JP 11 011396 A (HITACHI ZOSEN CORP), 19 janvier 1999 (1999-01-19)

## Description

### 1. Domaine Technique

La présente invention concerne le domaine des systèmes de sécurité pour équipage de navires, permettant de localiser les personnes tombées ou perdues en mer, d'alerter les réseaux de secours et de faciliter le sauvetage. L'invention concerne plus particulièrement, un procédé et un dispositif d'alerte et de localisation de sinistre, ainsi ainsi qu'une balise de localisation de sinistre.

### 2. Etat de la Technique Antérieure

Dans le domaine de la sécurité en mer, on connaît par la demande internationale WO-98/38083, au nom du demandeur, un dispositif pour modifier la trajectoire d'un bateau. Ce dispositif comprend un émetteur radio porté par un navigateur et un récepteur radio pouvant agir sur le compas d'un pilote automatique par l'intermédiaire d'un circuit de commande. La commande est capable de dévier l'aiguille du compas magnétique vers un Nord fictif par l'intermédiaire de bobines inductives disposées autour du compas.

Ce dispositif est mis en fonctionnement pendant une course en mer, quand le pilote automatique est en service et il est prévu que le navigateur garde l'émetteur en permanence sur soi. Le récepteur capte alors en permanence le signal radio généré par l'émetteur, puisque le navigateur est à bord du bateau. Si jamais le navigateur tombe à la mer, la liaison radio entre l'émetteur immergé et le récepteur embarqué s'interrompt. Le récepteur détecte l'absence de signal et agit sur le circuit de commande pour dévier l'aiguille du compas magnétique vers un Nord fictif. Le pilote automatique cherche alors à rattraper sa consigne de route et agit sur les gouvernes pour que le bateau change de cap. Le bateau se met alors à tourner en rond de façon inespérée auprès du point de chute du naufragé.

Ce dispositif pour modifier la trajectoire d'un bateau est tout particulièrement indiqué pour les courses de bateau en solitaire. Il s'adapte parfaitement aux voiliers légers.

Dans le cas de voiliers de course toutefois, à des vitesses aussi élevées que 40 noeuds (75 km/h) ou 50 noeuds (93 km/h) qui sont atteintes actuellement, un changement de cap brutal est prohibé. Pourtant la diffusion du dispositif pour modifier la trajectoire d'un bateau a avivé le besoin d'un dispositif de sécurité pour les navigateurs participant aux courses en solitaire.

Suite à une série de sinistres en mer contemporains à la fois sur des bateaux de course en solitaire, en équipage mais aussi dans des flottilles de pêche, la demande d'un dispositif de sécurité adapté s'est faite impérieuse.

Dans le cas des navires de pêche, des navires commerciaux et des bâtiments lourds de surface, l'inertie est trop grande pour envisager un brusque changement de cap pour tourner auprès du point où un naufrage se produit.

L'objet de la présente invention est donc de développer un nouveau dispositif de sécurité pour l'équipage d'un bateau destiné à faciliter le sauvetage d'une personne tombée à la mer.

Un objectif de l'invention est de permettre de localiser précisément toute personne tombée à la mer.

Un autre objectif de l'invention est de transmettre automatiquement un signal de détresse destiné à être capté et retransmis par les réseaux de secours pour alerter les autres navires se trouvant dans les parages, ainsi que les centres de secours, voire les aéronefs se trouvant dans la zone.

### EXPOSE SOMMAIRE DE L'INVENTION

Succinctement, l'invention prévoit de former un système de sécurité à bord d'un bateau destiné à faciliter le sauvetage d'une personne tombée à la mer en équipant chaque navigateur à bord d'un appareil radioémetteur portatif individuel et en établissant des liaisons radio régulières entre chaque appareil et un dispositif centralisé de monitoring radio, c'est-à-dire un dispositif apte à recevoir les signaux radios de chaque appareil portatif individuel (voire à les interroger tour à tour par émission radio) et à scruter l'absence de tout appareil qui signifierait la perte d'un navigateur à la mer, en surveillant la réception régulière des signaux radios émis par chaque appareil et en détectant toute absence de réception de l'appareil portatif d'un navigateur pour déclencher dans ce cas une procédure de détresse.

De façon surprenante, l'invention a prévu dans la procédure de détresse d'enregistrer automatiquement et immédiatement le positionnement exact du sinistre à l'aide d'un appareil GPS du bord, pour que les autres navigateurs à bord puissent détourner sans délai le bateau sur la position exacte du sinistre et récupérer leur coéquipier tombé à la mer. L'invention a prévu aussi de larguer automatiquement et immédiatement une balise flottante équipée elle-même d'un appareil GPS et de moyens de transmissions radios pour répercuter au navire, voire à d'autres navires équipés du système, la position rectifiée du naufragé, ce qui convient particulièrement en cas de courant et de dérive.

La balise est avantageusement équipée d'un feu à éclats et de moyens de sauvetage complets (canot de survie, pack de survie, VHF portative) pour que le naufragé puisse la rejoindre et se secourir lui-même dans un premier temps avant que les secours ne rejoignent la balise. La balise est avantageusement équipée en outre d'un transpondeur radar pour faciliter son repérage par tous les navires et par tous les moyens de secours.

L'invention a prévu encore dans la procédure de détresse en cas de détection d'un appareil portatif d'un navigateur, de déclencher automatiquement une émission d'alerte de détresse du Système Mondial de Sécurité en Mer (SMDSM) par l'intermédiaire de la station de radio communication d'alerte de détresse SMDSM, qui équipe obligatoirement les navires de haute mer.

L'alerte de détresse SMDSM peut être émise soit par appel sélectif numérique, ce qui permet d'alerter les stations côtières, ainsi que tous les navires présents sur la zone qui enregistrent et se retransmettent automatiquement l'Alerte de Détresse, de façon à dépêcher des secours.

Le largage de balise et le déclenchement automatiques d'une alerte de détresse sont particulièrement fondamentales en cas de chute à la mer d'un navigateur en solitaire ou de naufrage de tout le navire avec tous ses membres d'équipage.

Ces trois actions fondamentales sont complémentaires, mais indépendantes et peuvent être mises en oeuvre isolément ou conjointement, comme on le verra par la suite.

L'invention est obtenue en mettant en oeuvre un procédé pour la sécurité à bord d'un navire, permettant de détecter un naufrage d'un ou de plusieurs navigateurs, de donner une alerte immédiate et de localiser avec précision le naufrage, de manière à dépêcher des secours sans délai et à permettre un sauvetage rapide du ou des naufragés, le procédé mettant en oeuvre des étapes consistant à :
- équiper chaque navigateur ou au moins, une partie des navigateurs à bord, d'un appareil radio-émetteur portatif individuel respectif, chaque appareil émettant régulièrement un signal radio d'identification,
- scruter en permanence, au moyen d'un dispositif de radiomonitoring, la réception et l'identification des signaux radio émis régulièrement par chaque appareil portatif individuel,
- détecter automatiquement toute absence de réception de l'émission régulière de signal radio d'au moins un appareil portatif individuel, et dans ce cas,
- enregistrer automatiquement des données précises de position du naufrage délivrées, à bord du navire, par un appareil de Système calcul de Positionnement sur le Globe terrestre par liaison avec un réseau de satellites (GPS), les données précises de position étant mémorisées dès l'instant de la détection d'absence de réception de l'émission régulière de signal radio d'au moins un appareil portatif individuel, et
- afficher les données précises de position enregistrées automatiquement, afin qu'un autre navigateur du bord déroute le navire et le dépêche sans retard sur la localisation précise du naufrage.

De préférence on déclenche automatiquement une alarme à bord du navire.

L'invention est réalisée préférentiellement avec un dispositif de radiomonitoring destiné à scruter la présence d'un ou de plusieurs appareils radioémetteurs portatifs individuels, pour former un système de sécurité à bord d'un navire et permettre de détecter un naufrage d'un ou de plusieurs navigateurs, à donner une alerte immédiate et à localiser avec précision le naufrage, de manière à dépêcher des secours sans délai et à permettre un sauvetage rapide du ou des naufragés, le dispositif étant **caractérisé en ce qu**'il comprend :
- des moyens de réception des signaux radio d'identification émis régulièrement par chaque appareil portatif individuel,
- des moyens pour scruter en permanence la réception régulière et l'identification des signaux radios émis par chaque appareil portatif individuel,
- des moyens pour détecter automatiquement toute absence de réception du signal radio d'au moins un appareil portatif individuel et,
- des moyens pour enregistrer automatiquement des données précises de position de naufrage délivrés par un appareil de système de calcul de positionnement sur le globe terrestre par liaison avec un réseau de satellites, les données précises de position du naufrage (MOB) étant enregistrées sensiblement dès l'instant de la détection d'absence de l'émission radio régulière d'au moins un appareil portatif individuel.

Il est prévu, en cas de détection d'absence d'un appareil portatif, des étapes consistant à :
- continuer à scruter en permanence, au moyen du dispositif de radiomonitoring, la réception et l'identification des signaux radio émis régulièrement par chacun des autres appareils portatifs individuels,
- détecter automatiquement toute autre absence de réception de l'émission régulière de signal radio d'au moins un autre appareil portatif individuel, et dans ce cas,
- enregistrer aussi automatiquement d'autres données précises de position du navire délivrées par l'appareil à bord de positionnement global par satellite (GPS) dès l'instant de la détection d'absence de réception d'un autre appareil portatif individuel,
- redéclencher, le cas échéant l'alarme du bord, et
- afficher alternativement ou sur commande, chacune des données précises de position enregistrées automatiquement.
- Il est prévu en cas de détection d'absence d'au moins un appareil portatif individuel des étapes consistant à :
- enregistrer automatiquement aussi, au moyen du dispositif de radiomonitoring, l'identification de chaque appareil portatif individuel dont l'absence de réception a été détectée et, afficher chaque identification enregistrée, alternativement ou sur commande.

Il est prévu, en cas de détection d'absence d'au moins un appareil portatif individuel, des étapes consistant à :
- enregistrer automatiquement aussi, au moyen du dispositif de radiomonitoring, l'heure ou le temps écoulé à partir de l'instant de la détection d'absence de réception d'émission radio de chaque appareil portatif individuel et,
- afficher l'heure ou le temps écoulé enregistré, alternativement ou sur commande.

Avantageusement, le dispositif de radiomonitoring permet de détecter immédiatement l'absence de réception d'un appareil portatif individuel, d'enregistrer immédiatement les données précises de position de l'appareil de calcul de positionnement global par satellites (GPS) à bord du navire et de déclencher l'alarme dans un intervalle de temps inférieur à cinq secondes.

Il est prévu une étape complémentaire, en cas de détection d'absence de réception d'un appareil portatif individuel, consistant à :
- larguer automatiquement au moins une balise radio de localisation et de survie (BLS) dès l'instant de la détection d'absence de réception de l'émission régulière de signal radio d'au moins un appareil portatif individuel, la balise comprenant un corps flottant, un appareil de système de calcul de positionnement sur le globe terrestre par liaison avec un réseau de satellites (GPS), et un dispositif radioémetteur apte à transmettre des messages radio contenant des données précises de position délivrées par l'appareil de calcul de positionnement (GPS).

Il est prévu une étape supplémentaire consistant à :
- larguer en outre un container flottant de sauvetage relié à la balise radio de localisation et de survie, le container flottant pouvant contenir notamment un canot de sauvetage, un pack de survie, un appareil émetteur-récepteur VHF et/ou un téléphone satellitaire.

Il est prévu que la balise est équipée d'un transpondeur radar et par une étape supplémentaire consistant à :
- rechercher et repérer la localisation de la balise à distance au moyen d'un dispositif de balayage radar.
- Il est prévu des étapes complémentaires consistant à :
- recevoir, à l'aide de moyens de radioréception, les messages radio émis par le dispositif de la balise (BLS), et,
- enregistrer successivement les données précises de positionnement contenues dans les messages de la balise.

Il est prévu une étape complémentaire consistant à :
- comparer les données précises de position (à bord) du navire, délivrées par l'appareil de calcul de positionnement global par satellites (GPS) embarqué à bord du navire, avec les données précises de position de la balise, délivrées par l'appareil de calcul de position globale par satellites (GPS) embarqué dans la balise, pour déterminer ultra précisément par calcul différentiel la position de la balise par rapport au navire.

Il est prévu une étape complémentaire consistant à :
- réactualiser l'affichage des données de position du naufrage, en affichant les données précises de positionnement de la balise enregistrées successivement.

Avantageusement, les données de position du naufrage et/ou de la balise sont déterminées avec une précision en deçà d'une dizaine de mètres.

Il est prévu que l'affichage des données précises de position du naufrage et/ou de positionnement de la balise est effectué sous forme de coordonnées géodésiques.

Il est prévu que l'affichage des données précises de position est effectué sous forme d'indications de cap et de distance.

Il est prévu que que les données de la position du naufrage et/ou des positions successives de la balise sont transmises et affichées sur un écran de cartographie d'un ordinateur de bord.

De préférence, on détermine, au moyen de l'ordinateur de bord, la route à suivre (TRK) et/ou les points de passage (WPT) jusqu'à la position du naufrage (MOB) ou jusqu'à la position de la balise (BLS).

Avantageusement, on communique la route à suivre (TRK) et/ou les points de passage (WPT) au pilote automatique pour que le navire rejoigne automatiquement les lieux du naufrage.

Il est prévu une étape supplémentaire, en cas de détection d'absence de réception d'un appareil portatif individuel, consistant à :
- mettre automatiquement le navire en mouvement stationnaire.

Selon une alternative, on active et on module un champ de bobines magnétiques disposées autour d'un compas magnétique faisant partie d'un système de pilotage automatique de façon à dévier le compas sur un Nord ou un Sud fictif, afin que le pilote automatique fasse décrire au navire une trajectoire circulaire stationnaire.

Selon une autre alternative, on active et on module le champ de bobines magnétiques disposées autour d'un compas magnétique faisant partie d'un système de pilotage automatique du navire, pour dévier le compas sur un Nord ou un Sud fictif, en fonction de la direction du vent, de façon à maintenir le navire en configuration de "voilier à la cape" face au vent, voiles fasseyantes, en position stationnaire.

En variante, on déclenche une interruption de fonctionnement d'un ou des moteurs du navire.

Il est prévu, en cas de détection d'absence de réception d'un appareil portatif individuel, consistant à :
- déclencher automatiquement une procédure d'Alerte de Détresse, comportant une activation, au moins, d'une installation de station radioélectrique à bord du navire, déclenchant au moins une émission d'une alerte de détresse dans le cadre d'un service de radiocommunications faisant partie du Système Mondial de Détresse et de Sécurité en Mer (SMDSM) selon les résolutions de l'Organisation Maritime Internationale (O.M.I).

Selon une premiére alternative, la procédure d'alerte de détresse s'adresse aux stations côtières et/ou à d'autres navires sur zone et se caractérise par une étape consistant à :
- déclencher une émission radio d'alerte de détresse par Appel Sélectif Numérique (DSC) faisant partie du Système Mondial de Détresse et de Sécurité en Mer (SMDSM), selon les résolutions de l'Organisation Maritime Internationale (O.M.I.).

Avantageusement, l'émission d'alerte de détresse par Appel Sélectif Numérique (DSC) comporte des données de position enregistrées automatiquement au moment du déclenchement de la procédure de détresse, outre l'heure d'appel, l'indicatif d'appel, l'identité de la station du navire et d'éventuels autres codes.

Alternativement, la procédure d'alerte de détresse s'adresse à un service de radiocommunications spatiales et se caractérise par une étape consistant à :
- déclencher l'émission d'une alerte de détresse via un satellite du réseau de satellites INMARSAT de l'Organisation INternationale de Télécommunications MARitimes par SATellites.

De préférence, l'émission d'alerte de détresse est effectuée en déclenchant une station terrienne du navire faisant partie du système à réseau de satellites INMARSAT, l'émission correspondant notamment au canal standard C et/ou aux capacités d'Appel de Groupe Amélioré (EGC) du Service d'Emission Coordonnées et de Réception Automatique de Renseignements sur la Sécurité Maritime ("Service SafetyNet International"), en particulier dans la bande de radiocommunications à 1,6 GHz.

Enfin, il est prévu aussi des étapes consistant à :
- détecter automatiquement des avaries du navire, notamment de détecter une montée de niveau d'eau dans le navire, de détecter un incendie à bord et/ou de détecter une attitude excessive du navire au moyen de capteurs via une centrale d'alarme, et de,
- déclencher automatiquement une procédure d'alerte de détresse en cas de détection d'une avarie au navire.

D'autres caractéristiques, buts et avantages de l'invention apparaîtront à la lecture de la description détaillée ci-après, de la mise en oeuvre de l'invention et des modes de réalisations préférés, donnés à titre d'exemple non limitatif, et en regard des dessins annexés.

### BREVE DESCRIPTION DES DESSINS

Sur les dessins annexés,
- la figure 1 représente un schéma synoptique d'ensemble d'un premier exemple de réalisation de système selon l'invention,
- la figure 1A représentant un schéma synoptique du dispositif récepteur de radiomonitoring en liaison avec un appareil radio-émetteur individuel,
- la figure 1B représentant un schéma synoptique de la balise radio-émettrice selon l'invention, équipée d'un GPS, d'un modem radio et d'un transpondeur radar avec l'unité centrale de traitement et des moyens d'alimentation.
- la figure 2 représente une vue schématique d'une balise flottante de localisation et de survie selon l'invention, montrant la disposition des antennes radio, GPS, du transpondeur radar, du feu à éclat et du canot de survie.
- la figure 3 représente des vues latérales légèrement plongeante d'un premier exemple de réalisation d'une balise flottante de localisation et de survie selon l'invention, et d'un dispositif de largage de la balise selon l'invention, la figure 3A montrant une vue du corps de la balise et la figure 3B montrant la balise montrée en position d'attente dans le dispositif de largage.
- la figure 4 représente des vues d'un appareil radio-émetteur portatif individuel selon un premier exemple de réalisation de l'invention, la vue 4a montrant l'appareil portatif individuel vu de face, la vue 4b montrant l'appareil vu de côté.
- la figure 5 représente une vue extérieure d'un dispositif de charge d'appareils portatifs individuels selon un premier exemple de réalisation de l'invention.

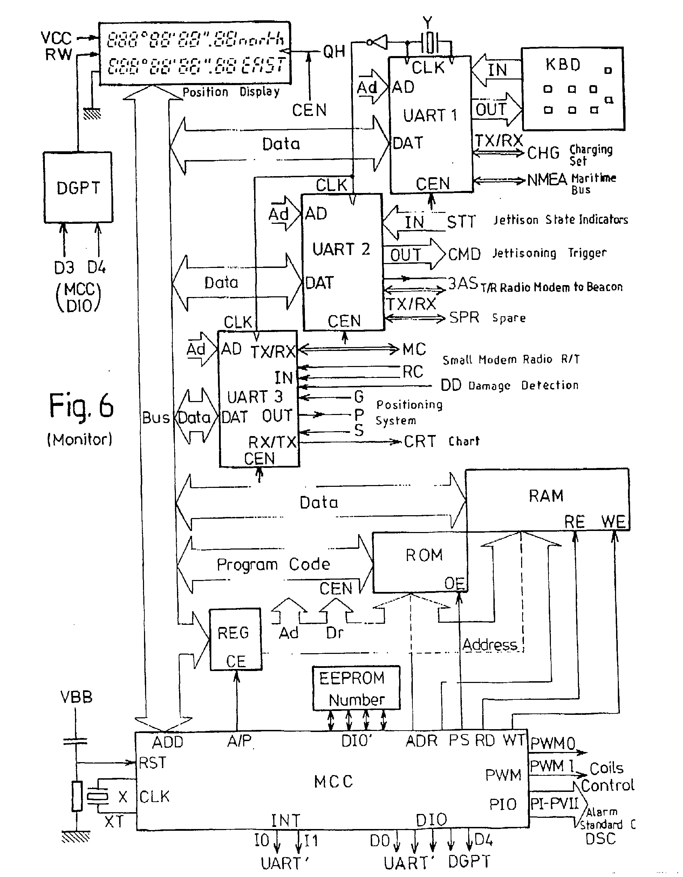

- la figure 6 représente un schéma électronique d'ensemble de l'unité centrale des interfaces et des entrées/sorties du dispositif de radiomonitoring selon le mode de réalisation préféré de l'invention.

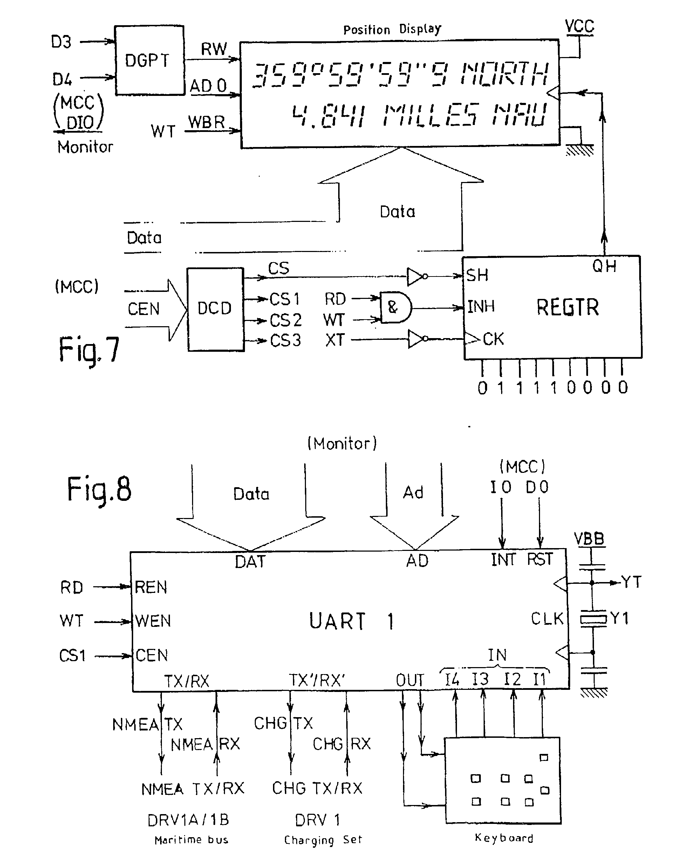

- la figure 7 représente un schéma électronique fonctionnel détaillé des moyens d'affichage de position du dispositif.
- la figure 8 représente un schéma électronique fonctionnel détaillé de l'interfaçage des moyens de transmissions du dispositif de la figure 6 avec un clavier, des dispositifs de charge d'appareils, et un bus marine.

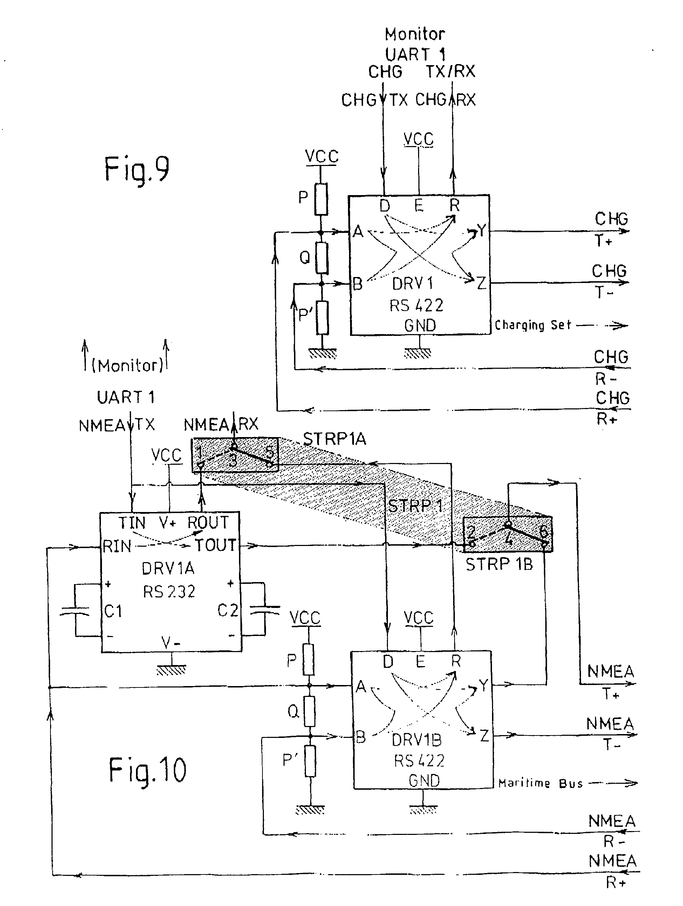

- la figure 9 représente des détails électroniques d'interfaçage/pilotage de transmission entre le dispositif de radiomonitoring de la figure 6 et des dispositifs de charge d'appareils.
- la figure 10 représente des détails d'interfaçages/pilotages de transmissions entre le dispositif de radiomonitoring de la figure 6 et le bus marine.

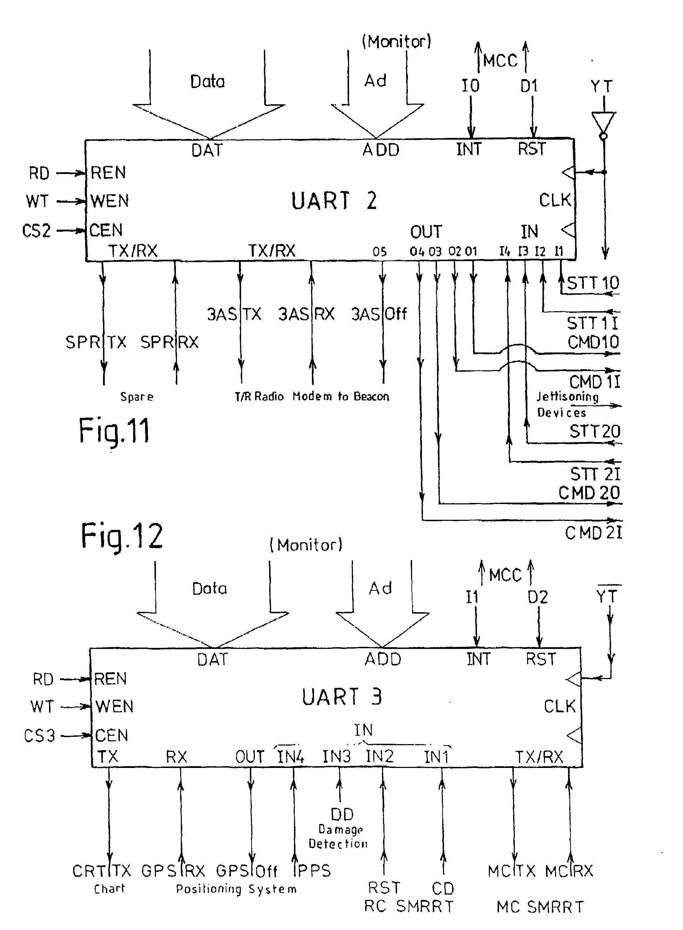

- la figure 11 représente un schéma électronique fonctionnel détaillé de l'interfaçage des moyens de transmission du dispositif de radiomonitoring de la figure 6 avec des dispositifs de largage (indicateurs d'états de largué et commandes de déclenchement de largage), et avec un modem radio-émetteur/récepteur à destination de la balise, ainsi qu'avec une ligne de transmission libre en réserve.
- la figure 12 représente un schéma électronique fonctionnel détaillé de l'interfaçage des moyens de transmission du dispositif de radiomonitoring de la figure 6 avec un petit modem radio-récepteur/émetteur (SMRRT) à destination du ou des appareils portatifs individuels, avec des moyens de détection d'avarie du navire (DD) et avec le système de positionnement (GPS) ainsi qu'avec un affichage sur carte électronique.

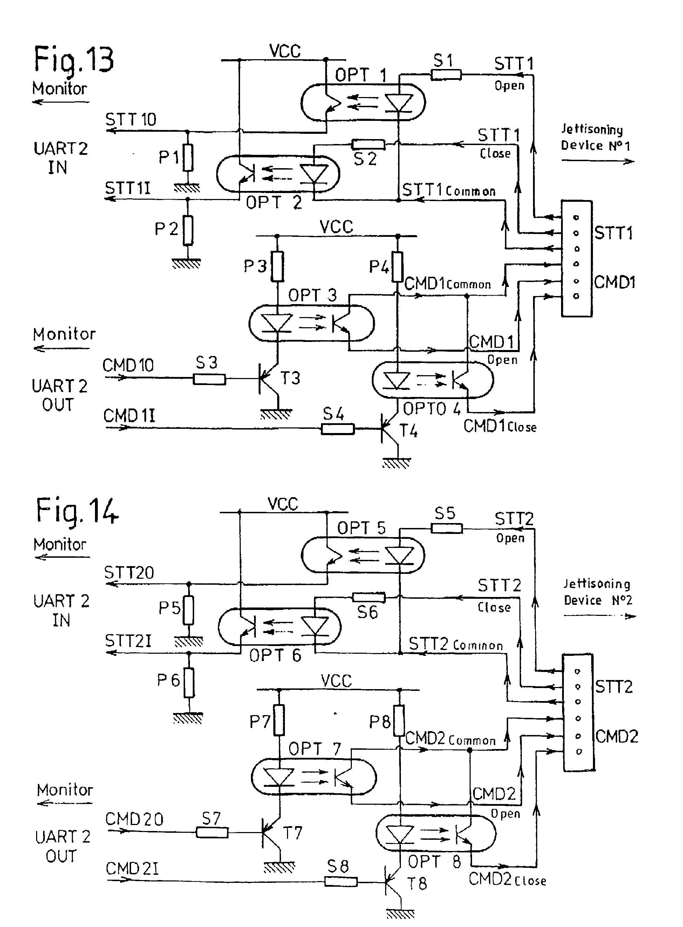

- la figure 13 représente un schéma électronique fonctionnel détaillé d'étages de couplage préservé d'entrée/sortie (à optocoupleurs) entre l'interface de la figure 11 du dispositif de radiomonitoring et un premier dispositif de largage.
- la figure 14 représente un schéma électronique fonctionnel détaillé d'étages de couplage préservé d'entrée/sortie (à optocoupleurs) entre l'interface de la figure 11 du dispositif de radiomonitoring et un second dispositif de largage.
- la figure 15 représente des détails d'interfaçage/pilotage de transmission par liaison série RS232 entre l'interface de la figure 11 du dispositif de radiomonitoring et le modem radio-émetteur/récepteur à destination de la balise.
- la figure 16 représente des détails de pilotage de transmission par liaison série RS232 ou RS422 entre l'interface de la figure

11 et la ligne libre en réserve.
- la figure 17 représente des détails de réalisation des lignes de commande et de réception d'un petit modem radiorécepteur/émetteur à destination des appareils émetteurs/récepteurs individuels portatifs.
- la figure 18 représente des détails de réalisation de pilotage de transmission par liaison série RS232 de l'interface de la figure 12 avec le Système de Positionnement GPS, ainsi qu'avec un affichage électronique de carte marine.
- la figure 19 représente des détails de réalisation de moyens de déclenchement d'alarme commandés par un port d'entrée/sortie de l'unité centrale du dispositif de radiomonitoring de la figure 6.
- la figure 20 représente des détails de réalisation de moyens de déclenchement d'une alerte de détresse par le standard C du système INMARSAT commandés par un port d'entrée/sortie de l'unité centrale du dispositif de radiomonitoring de la figure 6.
- la figure 21 représente des détails de réalisation de moyens de déclenchement, d'une alerte de détresse SMDSM par un dispositif d'Appel Sélectif Numérique (DSC) commandés par un port d'entrée/sortie de l'unité centrale du dispositif de radiomonitoring de la figure 6.

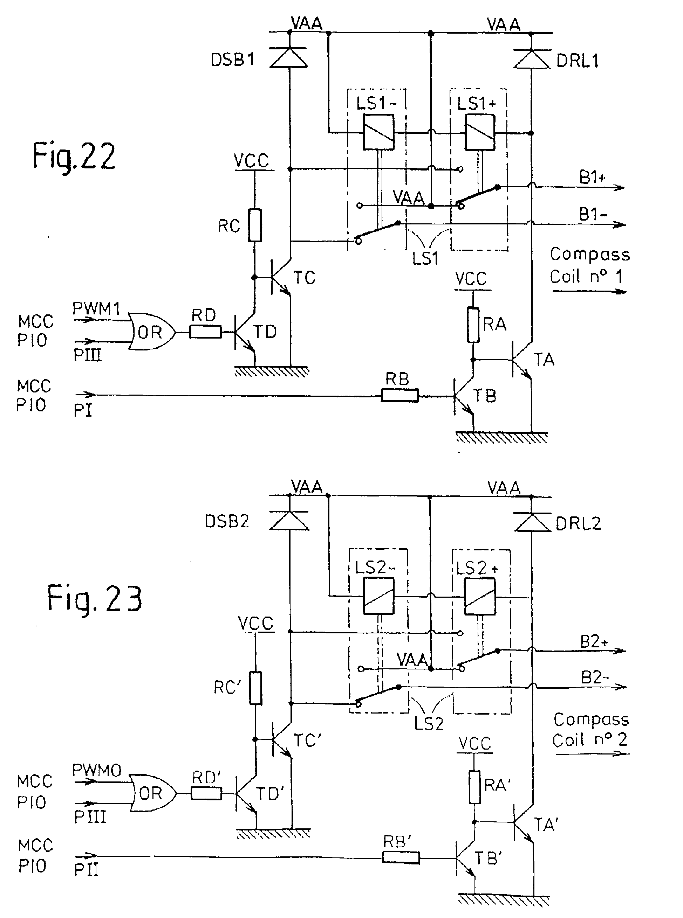

- la figure 22 représente des détails de réalisation de moyens d'excitation et de modulation d'un champ magnétique produit par une bobine disposée auprès d'un compas magnétique, commandés également par des ports d'entrée/sortie de l'unité centrale du dispositif de radiomonitoring de la figure 6.
- la figure 23 représente des détails de réalisation de moyens d'excitation et de modulation d'un champ magnétique produit par une bobine disposée auprès du compas magnétique, commandés également par des ports d'entrée/sortie de l'unité centrale du dispositif de radiomonitoring de la figure 6.

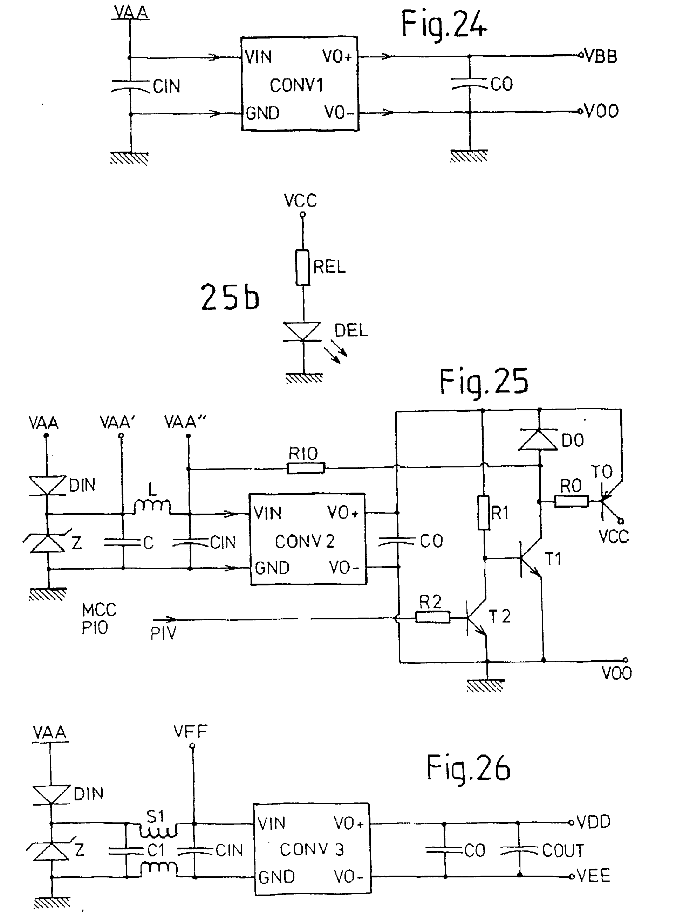

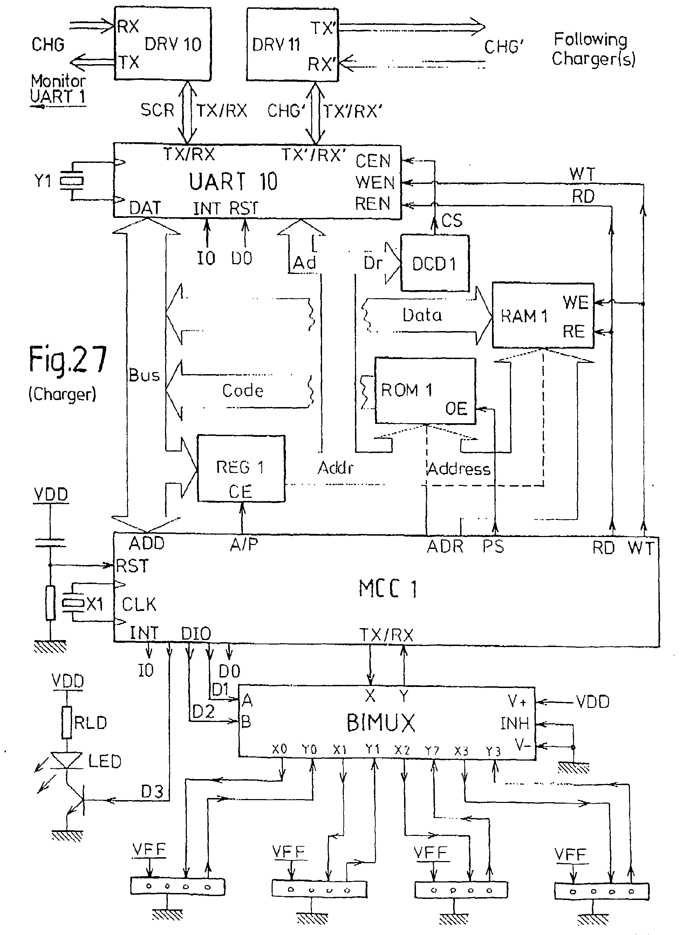

- les figures 24, 25 et 26 représentent des étages d'alimentation par convertisseurs des divers étages électroniques du dispositif de radiomonitoring de la figure 6, des interfaces d'entrée/sortie des figures 7 à 23, et du dispositif de charge de la figure 27.
- la figure 27 représente un schéma électronique fonctionnel d'ensemble de l'unité centrale, de l'interface et des entrées/sorties d'un dispositif modulaire de charge d'appareils portatifs individuels.

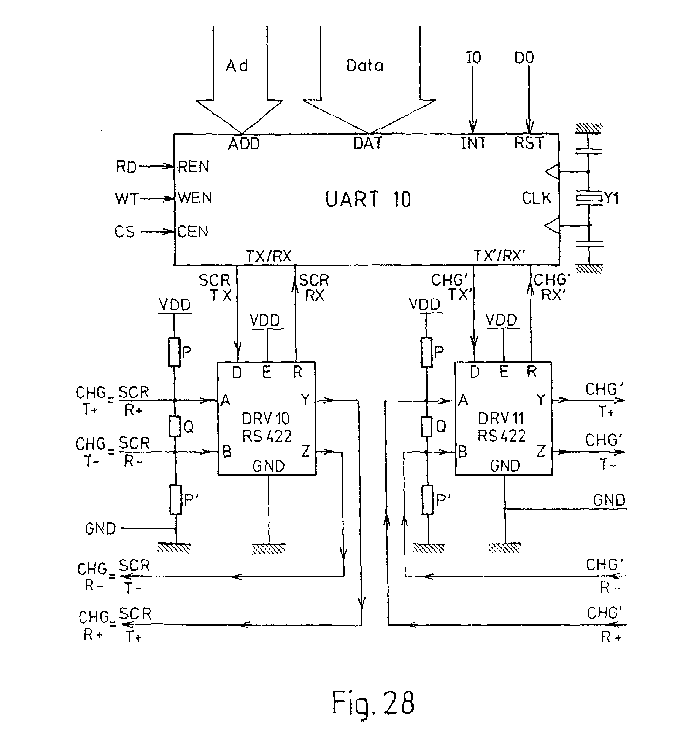

- la figure 28 représente des détails de réalisation de l'interface et des pilotes de transmission du dispositif modulaire de charge de la figure 27 avec d'une part, le dispositif de radiomonitoring de la figure 6 et, d'autre part, avec un autre dispositif modulaire de charge similaire.

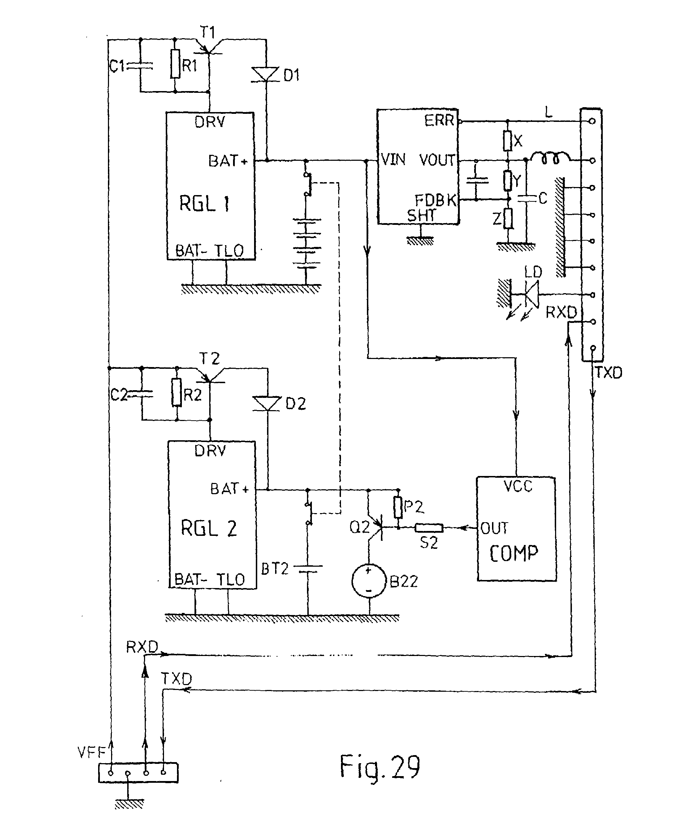

- la figure 29 représente un schéma électronique fonctionnel d'un appareil radio-émetteur portatif individuel comprenant des moyens de régulation de charge et d'alimentation, un petit modem radio-émetteur/récepteur en liaison avec le dispositif de radiomonitoring et un vibreur pour signaler une décharge d'accumulateurs.
- la figure 30 représente un schéma électronique fonctionnel d'ensemble du dispositif radiotransmetteur de la balise radio de localisation et de survie selon l'invention, le dispositif comprenant une unité centrale, une interface et des pilotes d'entrée/sortie en liaison avec le Système de Positionnement GPS de la balise et un modem radio-émetteur/récepteur de la balise à destination du dispositif de radiomonitoring à bord du navire, ainsi qu'une ligne de transmission libre en réserve.
- la figure 31 représente une vue latérale de la balise radio de localisation et de survie selon le mode de réalisation préféré de l'invention.
- la figure 32 représente une vue trois quart arrière du dispositif de largage de balise selon le mode de réalisation préféré de l'invention.

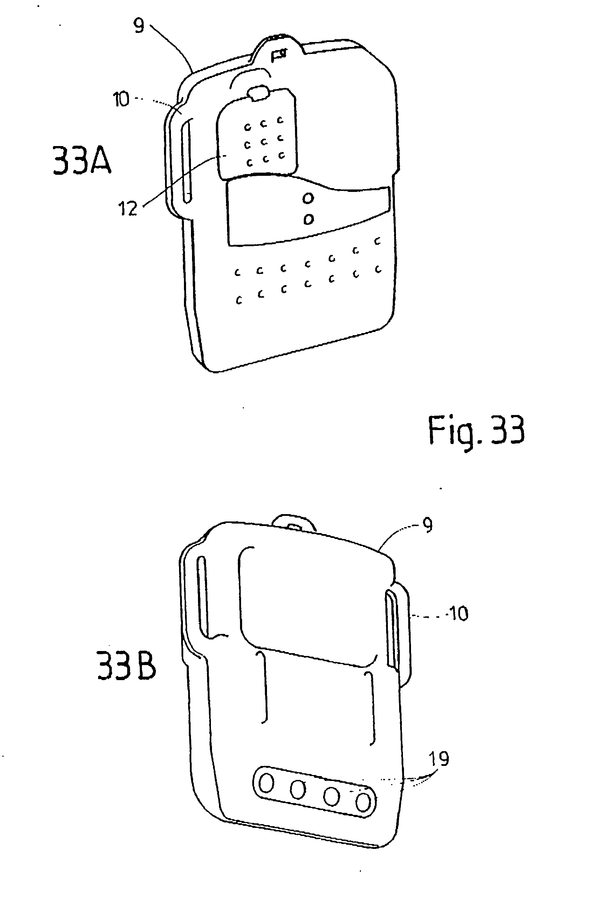

- la figure 33 représente des vues en perspective d'un appareil radio-émetteur portatif individuel selon le mode de réalisation préféré de l'invention, la vue 33A montrant l'appareil de face, la vue b montrant l'appareil de dos.

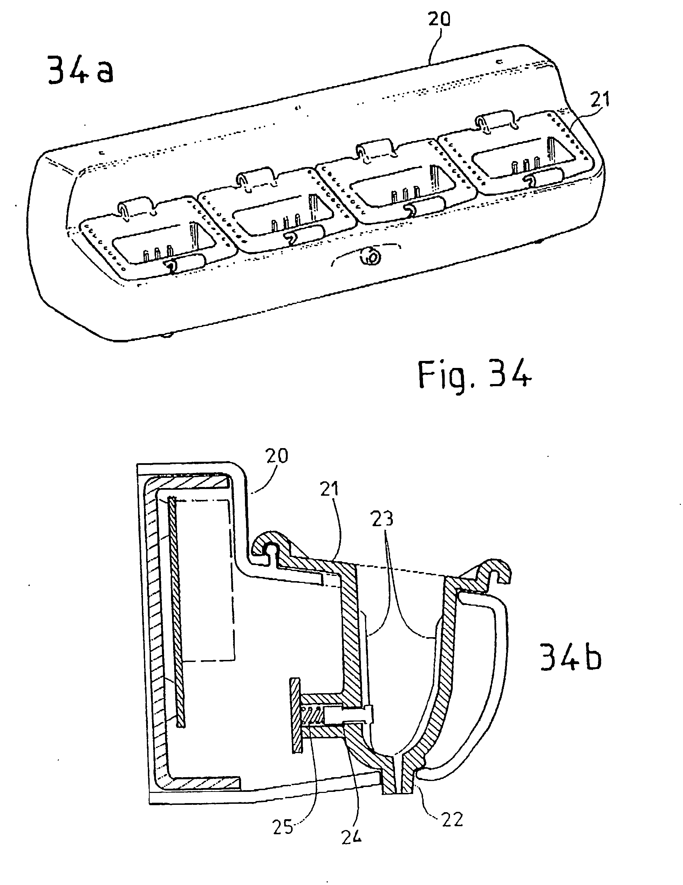

- la figure 34 représente une vue cavalière du dispositif de charge d'appareils portatifs individuels selon le mode de réalisation préféré de l'invention, la vue 34B montrant une coupe transversale du dispositif au milieu d'un emplacement de charge d'un appareil.

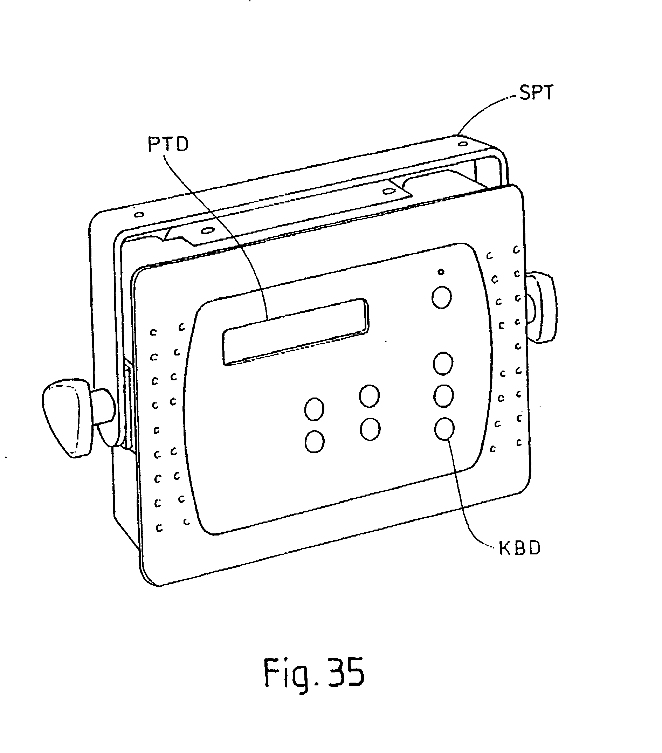

- la figure 35 représente une vue cavalière extérieure du dispositif de radiomonitoring selon le mode de réalisation préféré de l'invention, avec son clavier et son écran d'affichage.

### EXPOSE DETAILLE DE PRINCIPE DU PROCEDE SELON L'INVENTION

La base du procédé selon l'invention, pour détecter un naufrage d'une ou de plusieurs navigateurs embarqués à bord d'un navire, que ce soit sur mer ou sur un lac, repose sur l'utilisation d'un système comprenant un ou des appareils radioémetteurs portatifs individuels en liaison avec un dispositif de radiomonitoring capable à la fois de recevoir les émissions radio régulières de chaque appareil portatif individuel, d'écouter et de scruter en permanence la réception régulière des signaux radio émis par les appareils de manière à contrôler et à surveiller la présence et l'identification de chaque appareil à bord du navire.

L'appareil radio-émetteur portatif individuel est destiné à être porté par un navigateur, le procédé prévoyant de doter chaque navigateur, ou au moins une partie des navigateurs à bord d'un appareil portatif individuel.

Chaque appareil radio-émetteur est analogue à un mouchard.

Si jamais, un navigateur tombe à la mer, la liaison radio régulière entre l'émetteur de l'appareil et le dispositif de radiomonitoring s'interrompt.

La liaison s'interrompt naturellement car les ondes radios sont mal transmises dans l'eau. De plus, comme le navire s'éloigne du navigateur naufragé et qu'il est prévu que l'appareil radio-émetteur a une portée limitée, de l'ordre d'une dizaine de mètres à une centaine de mètres typiquement, la liaison est nécessairement coupée.

En outre, l'immersion de l'appareil provoque un court-circuit empêchant l'émission radio.

Plus précisément, il est prévu que l'appareil radio-émetteur selon l'invention est étanche, mais comporte des bornes de contact d'alimentation ou de transmission dont la mise en court-circuit commande l'arrêt des émissions radio.

A bord du navire, le dispositif de radiomonitoring qui surveille la réception des signaux radios émis et contrôlé par chaque appareil est apte à détecter immédiatement l'absence de réception de signal radio provenant de l'appareil portatif individuel immergé.

Le dispositif détecte automatiquement donc la disparition du navigateur correspondant.

Le système enclenche alors une procédure de détresse.

Le dispositif de radiomonitoring se comporte donc de façon analogue à un appareillage de monitoring médical utilisé dans les services d'urgence ou de secours et qui permet d'enregistrer de façon permanente des phénomènes physiologiques et de déclencher une alarme au moment des troubles.

Dans la présente, le terme de radiomonitoring désigne la technique de scrutation ou de surveillance radioélectrique d'un système complexe de radio-émissions/réceptions à l'aide d'un dispositif appelé moniteur ou scrutateur, qui capte et enregistre les paramètres des transmissions radios et signale toute évolution anomalie. Le moniteur est en outre destiné à la visualisation de données de position sur un système d'affichage ou un écran de façon analogue à un écran de visualisation ou de surveillance d'un réseau.

D'autres dispositions perfectionnées des appareils radioémetteurs portatifs individuels et du dispositif de radiomonitoring seront détaillées après l'exposé des actions déclenchées dans le cadre de la procédure de détresse.

Trois actions fondamentales sont prévues dans la procédure de détresse selon l'invention. Ces trois actions fondamentales peuvent être mises en oeuvre indépendamment, isolément ou de préférence en combinaison.

Les trois actions fondamentales de la procédure de détresse sont les suivantes.

La première action consiste à enregistrer automatiquement des données de position délivrées par un appareil de calcul de Positionnement Global par liaison avec un Système de Satellites, connu sous l'acronyme G.P.S. ou tout autre système équivalent, l'appareil de calcul de positionnement étant disposé à bord du navire.

De préférence, il est prévu de dédier un appareil GPS au système de sécurité à bord, en le reliant ou en l'associant directement au dispositif de radiomonitoring.

L'enregistrement immédiat des données de positionnement GPS permet de connaître très précisément le lieu du naufrage, c'est-à-dire le lieu où la personne est tombée à la mer.

Sur un bateau à équipage, les données de positionnement du naufrage peuvent alors être communiquées aux autres navigateurs qui seront alors à même de dérouter le navire et de revenir sans délai sur la localisation du naufrage pour récupérer immédiatement la ou les personnes tombées à la mer.

Cette disposition est capitale pour secourir le naufragé, car le navire d'origine du naufragé est le mieux en place et le plus concerné pour récupérer un coéquipier naufragé. Les autres navires et les réseaux de secours en mer faisant appel à des avions ou à des navires de reconnaissance mettent généralement plusieurs heures à se rendre sur les lieux et ils reste alors peu de chances de secourir le naufragé, compte tenu des problèmes de localisation, de dérive et de survie du naufragé, éventuellement accidenté, dans une eau à faible température.

Il est donc essentiel pour les autres navigateurs du navire à équipage d'origine du naufragé de connaître immédiatement et très exactement la position du naufragé pour pouvoir détourner le navire et revenir sans délai sur la localisation exacte du naufragé.

Consécutivement, l'invention prévoit de déclencher automatiquement une alarme à bord du navire pour prévenir le reste de l'équipage de la perte d'un homme à la mer et d'afficher immédiatement les données précises de position enregistrées grâce au GPS au moment de la détection d'absence de réception d'un appareil portatif individuel.

La deuxième action de la procédure de détresse selon l'invention, consiste à larguer et à activer automatiquement une balise radio-émettrice flottante de localisation et de survie, immédiatement au moment de la détection d'absence de réception d'un appareil portatif individuel.

La balise selon l'invention, comprend également un autre appareil de calcul de positionnement GPS relié à un dispositif de radiotransmission.

La balise de localisation et de survie selon l'invention est alors capable de communiquer exactement sa position à son navire d'origine.

Le navire est donc équipé de moyens de radio-réception des signaux radios émis par la balise et d'extraction des données de positionnement précises de la balise contenues dans les messages radios de la balise.

Le procédé selon l'invention, prévoit donc d'enregistrer et d'afficher les données de position communiquées par les messages radios de la balise.

Plus précisément, les calculs de positionnement de l'appareil GPS de la balise ne sont généralement pas disponibles immédiatement après l'activation de la balise, car l'appareil GPS a besoin d'un certain temps pour établir des liaisons avec le réseau de satellites Navstar du Système de Positionnement sur le Globe terrestre (GPS).

Il faut quelques minutes, typiquement une à deux minutes actuellement, pour qu'un appareil GPS détermine sa position après sa mise en service.

Il est donc avantageux dans un premier temps d'afficher la position du naufrage communiquée par l'appareil GPS disposé à bord du navire, et dans un second temps, de réactualiser l'affichage avec les données de position de la balise communiquées par messages radios.

La balise émet régulièrement des messages radios donnant sa position.

Dans le mode de réalisation préféré de l'invention, le dispositif de radiomonitoring à bord du navire comprend aussi des moyens d'émissions de signaux radios et peut envoyer des messages d'interrogation à la balise qui répond alors en donnant sa position par message radio en retour.

Il est à noter que les messages radios de la balise peuvent être captés et décodés par d'autres navires que le navire d'origine, s'ils sont équipés du même système de sécurité. Les messages radios de la balise contiennent des données d'identification du Système d'Identification Maritime Mondial MMSI.

A titre indicatif, il est prévu que la balise émet des messages radioélectriques en ondes décimétriques à ultra haute fréquence dans la bande autour de 868 MégaHertz ou dans la bande autour de 869 MégaHertz.

Accessoirement, il est prévu aussi d'enregistrer l'heure de la détection d'absence d'un appareil individuel portatif ou le temps écoulé depuis cet instant et d'afficher sur commande l'heure ou le temps écoulé enregistré à l'aide du dispositif de radiomonitoring selon l'invention.
Cette indication peut être utile sur un voilier en solitaire ou en équipage à deux navigateurs, si on découvre le sinistre longtemps après la chute à la mer du navigateur pour estimer la dérive due aux courant marins et la localisation probable du naufragé, ainsi que de la balise.

La balise est équipée en outre selon l'invention, d'un transpondeur radar.

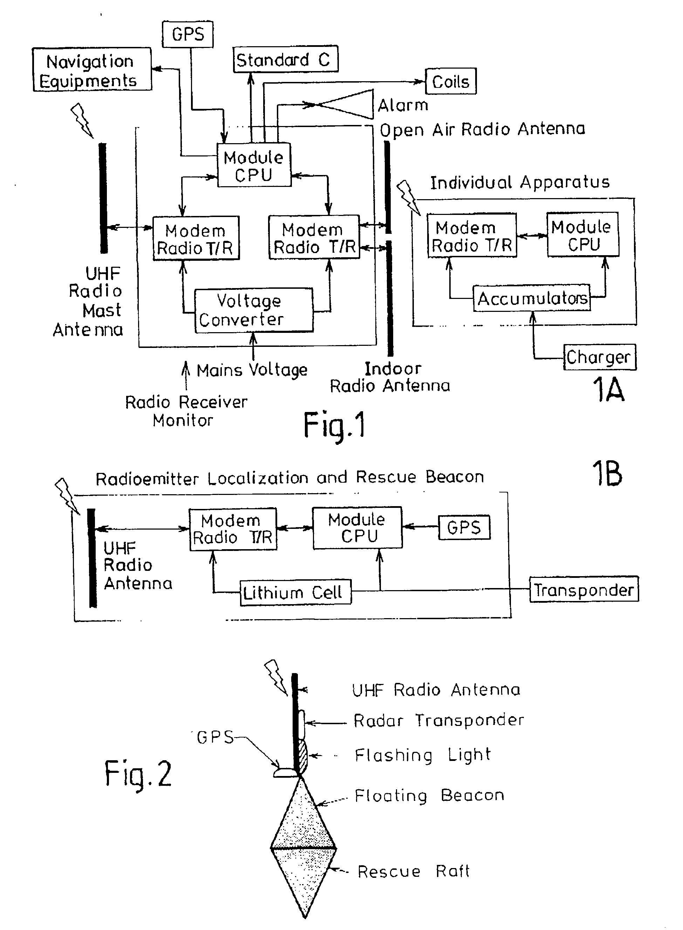

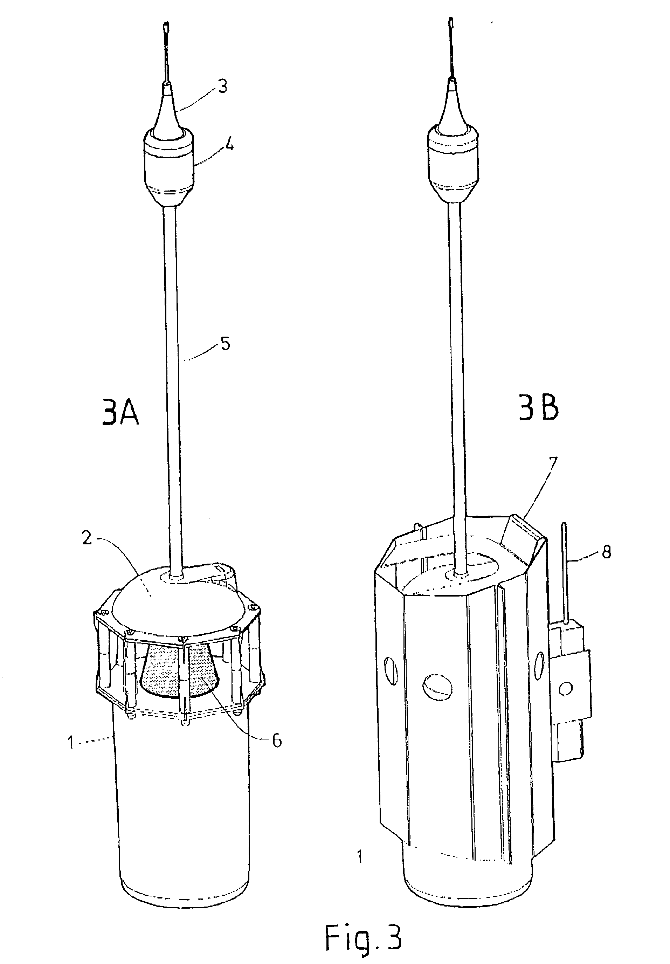

Comme le montre les figures 2 et 3, le transpondeur radar est disposé sur un mât surmontant le corps flottant de la balise, de façon à maintenir le transpondeur radar, ainsi que l'antenne de transmission radio en hauteur au-dessus du niveau de la mer pour augmenter la portée de localisation.

Le transpondeur de la balise permet de repérer la localisation de la balise à distance au moyen d'un dispositif de balayage radar.

Le transpondeur radar s'avère particulièrement utile dans l'éventualité où les appareils de positionnement GPS ne fonctionneraient pas ou que la balise est hors de portée radio. Il permet aussi avantageusement, à d'autres navires ou moyens de secours non équipés du système de sécurité en mer, de pouvoir localiser la balise et de se porter sur sa position.

Il est encore prévu que la balise comporte un fanal lumineux, de préférence un feu halogène à éclats intermittents longue distance.

Cette disposition permet au naufragé de repérer la balise larguée immédiatement après sa chute à la mer et de la rejoindre pour attendre des secours.

La balise peut en outre comprendre des moyens de survie pour le naufragé.

Un canot de sauvetage peut être disposé ainsi à l'intérieur du corps flottant de la balise.

Compte tenu de l'encombrement des canots de sauvetage, l'invention a prévu de disposer le canot de sauvetage dans un container flottant séparé, mais relié à la balise par un filin. Le filin est de préférence fluorescent et a une longueur de plusieurs dizaines de mètres à une centaine de mètres, ce qui augmente les chances du naufragé de rejoindre l'ensemble balise-container. Le naufragé peut alors facilement tirer à lui la balise ou le container.

De façon avantageuse, le container peut contenir, outre le canot de sauvetage, un pack de survie et un appareil émetteur-récepteur VHF, voire un téléphone satellitaire.

L'appareil émetteur-récepteur s'avère particulièrement favorable pour le moral du naufragé, donc pour sa survie, car il lui permet d'entrer en contact avec l'équipage de son navire ou avec d'autres navires sur la zone.

Le container est largué en même temps que la balise au moyen d'un autre dispositif de largage automatique.

Les dispositifs de largage de la balise et du container sont déclenchés en même temps par le dispositif de radiomonitoring dès la détection d'absence d'au moins un appareil portatif individuel.

Avantageusement, le dispositif selon l'invention est capable de larguer la balise avec le container le cas échéant, dans un intervalle de temps de l'ordre d'une à quelques secondes et notamment inférieur à cinq secondes.

Un navire atteint en effet couramment une vitesse de l'ordre de 10 à 20 noeuds (5 à 10 m/s) et les voiliers de course transatlantiques sont capables d'atteindre des vitesses de l'ordre de 30 à 40 noeuds (15 à 20 m/s), des objectifs de vitesse de 50 noeuds (26 m/s) étant même envisagés dans le futur. A de telles allures, en cinq secondes, le navire s'éloigne du navigateur de 25 mètres (28 yards) à 130 mètres (140 yards).

A ces distances, il reste possible à un homme à la mer de repérer le feu lumineux de la balise et de la rejoindre pour attendre des secours.

D'autre part, pour l'équipage du navire, l'affichage de la position du naufrage communiquée par le GPS embarqué à bord du navire permet d'atteindre une précision inférieure à une centaine de mètres (110 yards) et typiquement une précision de l'ordre de 10 mètres (11 yards).

Au surplus, l'invention a prévu de combiner les données de position du GPS de la balise avec les données de position du GPS du navire.

Une telle précision, jointe à une telle rapidité de localisation constitue un apport majeur de l'invention. Les radio balises de localisation de naufrage connues ont en effet souvent des problèmes pour entrer en liaison avec leur réseau de satellites, lors de croisement ou de fenêtres d'absence, problèmes qui peuvent durer plusieurs heures.

Dans un naufrage récent, la balise Argos du navire naufragé a été repérée seulement au bout de sept heures et les membres d'équipage ont été perdus.

En effet, en comparant les données de position délivrées par deux GPS séparés par une certaine distance, les imprécisions de positionnement des deux appareils GPS se soustraient et on obtient une mesure de la distance séparant les deux GPS ultra précise. Ce principe est mis en oeuvre dans les appareils DGPS de calcul de Positionnement Différentiel sur le Globe terrestre par satellite en se référant à une station réémettrice dont la localisation est connue très précisément.

Cependant, ce service nécessite un abonnement spécial et un équipement coûteux.

Dans la présente invention, la distance séparant le navire de la balise peut être connue ultra précisément, suivant ce principe, mais sans avoir besoin de recourir à un appareillage DGPS et ceci en tout point du globe.

Ainsi, la comparaison des données du GPS du navire avec les données du GPS de la balise permet de repérer ultra précisément la position de la balise par rapport au navire avec une erreur de quelques mètres (a few yards) seulement.

Dans la pratique, l'erreur de positionnement par mesures comparées entre deux GPS est inférieure à une dizaine de mètres (about ten or so yards), de l'ordre du mètre à une dizaine de mètres (within the order of one to ten yards about).

L'affichage des données de position est effectué de préférence sur un écran alphanumérique, qui peut comporter deux lignes de 16 caractères pour afficher les coordonnées géodésiques du lieu du naufrage et de la balise en latitude et en longitude correspondant à la précision évoquée ci-dessus.

L'affichage est effectué de préférence sur le dispositif de radiomonitoring du système de sécurité en mer, puisqu'il est à même de recevoir les données de position du GPS du navire et du GPS de la balise, et de les comparer, ainsi que de réactualiser régulièrement l'affichage avec les positions successives de la balise après l'avoir interrogée par signal radio et notamment en démodulant sa réponse.

Alternativement, il est possible de communiquer les données de position du naufrage et/ou de la balise obtenues par le dispositif à destination d'un ordinateur de bord dotés de logiciels de cartographie marine électronique, de façon à afficher les données de position du naufrage, ainsi que de la balise sur un écran de cartographie à deux dimensions avec toutes les indications cartographiques fournies par l'ordinateur (côtes, récifs,...).

Une telle disposition permet à l'ordinateur de bord de calculer automatiquement la route à suivre ou éventuellement les points de passage, jusqu'à la position du naufrage ou de la balise. De plus, l'ordinateur peut communiquer éventuellement la route à suivre à un système de pilotage automatique de façon à ce que le navire rejoigne automatiquement les lieux du naufrage ou la localisation de la balise, pour que les navigateurs restant à bord recherchent le naufragé.

Maintenant l'exposé précédent de l'enregistrement des données de position du navire délivrées par un GPS, du largage d'une balise radioémettrice équipée également d'un appareil GPS pour transmettre des données de position de la balise et les afficher sur un écran du bord, s'adresse surtout à une utilisation sur un navire à équipage dans la mesure où il est nécessaire qu'au moins un autre navigateur soit alerté à bord du navire et lise les données de position pour détourner le navire vers les lieux du naufrage.

La présente invention s'adresse également à la navigation en solitaire et a prévu une troisième action fondamentale pour le cas d'un navigateur solitaire naufragé, consistant à déclencher automatiquement une alerte de détresse dans le cadre du Système Mondial de Sécurité en Mer (SMDSM), mis en place par l'Organisation Maritime Internationale (O.M.I.).
La plupart des navires, même les bateaux de plaisance, sont équipés d'une installation de station radioélectrique permettant d'émettre et de recevoir des Appels Sélectifs Numériques (en anglais "Digital Sélective Call, abrégé DSC) en ondes métriques dans la bande de fréquence de 156 à 187 MégaHertz, précisément à 156,525 MégaHertz sur le canal 70 de la bande à très haute fréquence VHF.

Ces installations sont prévues pour déclencher depuis le poste de navigation des Alertes de Détresse et pour maintenir une veille permanente par Appel Sélectif Numérique (DSC) sur le canal 70 de la bande d'ondes métriques VHF. Le SMDSM permet que les Alertes de Détresse soient transmises du navire vers d'autres navires et retransmises automatiquement de navire en navire et jusqu'à des stations côtières qui déclenchent une alerte généralisée et déclenchent l'envoi de secours.

Il est préconisé aussi d'équiper un navire de haute mer d'une installation "terrienne" de navire de station de radiocommunications dans le cadre du service par satellites géostationnaires INMARSAT de l'Organisation INternationale de Télécommunications MARitimes par SATellites, permettant d'émettre une Alerte de Détresse sur le canal standard A, B ou C, le canal Standard C dans la bande de radiocommunications à 1,6 GHz étant préconisé.

Selon l'invention, il est prévu d'utiliser une installation radioélectrique du bord et déclencher automatiquement l'émission d'Alerte de Détresse en activant des contacts secs d'une de ces installations.

Les installations d'émission d'Alerte de Détresse comportent des numéros d'identification MMSI et leur propre appareil de système de calcul de positionnement sur le globe terrestre par liaison avec un réseau de satellites (GPS) et elles émettent automatiquement un message radiocommunication d'Alerte de Détresse contenant l'heure d'émission, l'identité de la station d'émission et la position indiquées par l'appareil de Positionnement Global par Satellites (GPS).

En Appel Sélectif numérique les données de position transmises sont limitées à une précision de un mille sur un mille carré. Ce système est le plus répandu.

La troisième action du procédé selon l'invention, en cas de détection d'absence de réception d'un appareil portatif individuel, consiste alors à déclencher automatiquement l'activation d'une installation de station radioélectrique du bord déclenchant l'émission radio d'une Alerte de Détresse par Appel Sélectif Numérique.

L'invention prévoit que le dispositif de radiomonitoring déclenche simplement l'installation d'émission d'alerte de détresse DSC en actionnant un contact sec existant sur de telles installations.

De façon avantageuse, le déclenchement automatique signale le sinistre immédiatement aux autres navires présents sur la zone dont les installations enregistrent automatiquement de façon incontestable les données d'Alerte de Détresse, déclenchent un signal d'alarme à leur bord et retransmettent automatiquement l'alerte aux autres navires en ajoutant leur propre identification, position et l'heure de retransmission.

Tous les navires présents sur la zone sont ainsi immédiatement avertis du sinistre et peuvent se disposer à porter secours.

Il est prévu de continuer à émettre des alertes de détresse tant qu'une personne à bord du navire sinistré ne désactive pas manuellement le dispositif.

Ainsi, dans le cas d'un naufrage d'un navigateur en solitaire ou du naufrage de tout le navire, l'alerte est maintenue pour dépêcher les autres navires sur place.

Une fois sur place, les autres navires peuvent automatiquement repérer plus exactement la position du naufrage en recherchant et en repérant la localisation de la balise selon l'invention, avec un dispositif de balayage radar.

Alternativement, ils peuvent interroger la balise radio selon l'invention, en l'interrogeant s'ils sont équipés eux-mêmes du système de sécurité en mer selon l'invention.

De préférence, l'Alerte de Détresse est émise en déclenchant automatiquement l'activation d'une installation terrienne du navire faisant partie du système INMARSAT, sur le Canal Standard C, c'est-à-dire dans la bande de radiocommunications à 1,6 GHz.

Ce model préféré d'Alerte de Détresse à l'avantage de communiquer les données complètes de position d'un appareil de calcul de Positionnement Global par Satellites GPS, c'est-à-dire avec une précision de l'ordre d'une dizaine à une centaine de mètres, sur une dizaine à une centaine de mètres?.

Le déclenchement automatique sur le canal Standard C de l'Organisation INMARSAT a donc l'avantage de donner aux autres navires un positionnement plus précis des lieux du naufrage.

Il est clair que les deux types d'Alertes de Détresse peuvent être déclenchés automatiquement concouramment si le navire est équipé des deux types d'installations.

Pour une utilisation de navigation en solitaire sur un bateau de plaisance notamment, il est encore prévu une autre action importante consistant à mettre automatiquement le navire en mouvement stationnaire. Une telle disposition est particulièrement importante pour que le naufragé puisse rejoindre son navire.

Sur un bateau à moteur, il est possible de couper automatiquement le contact ou l'alimentation du ou des moteurs pour immobiliser le navire.

Sur un bateau à voile équipé d'un pilote automatique, on a recours de façon particulière à un autre mode d'action consistant à faire décrire au navire une trajectoire circulaire stationnaire.

Un tel mouvement stationnaire est obtenu en suivant en particulier l'enseignement de la demande internationale WO 98/38083 au nom du même déposant et dont l'enseignement est incorporé à la présente par voie de référence.

Le mouvement stationnaire est obtenu en équipant le compas magnétique du pilote automatique du voilier avec un système de bobines magnétiques disposées autour de la rose du compas.

En cas de détection d'absence de réception de l'appareil portatif individuel du navigateur solitaire, on active et on module le champ magnétique produit par les bobines magnétiques de façon à bloquer le compas sur une direction de Nord ou de Sud fictive.

Par réaction, le pilote automatique cherchant à rétablir la direction du bateau déviée fictivement, va agir sur les commandes du voilier pour le faire tourner. Comme le compas reste bloqué, le bateau continuera à tourner indéfiniment en rond.

Alternativement, selon un autre mode d'action perfectionné, il est prévu de maintenir le voilier en configuration "à la cape", c'est-à-dire sensiblement face au vent, voiles fasseyantes, en position stationnaire.

Une telle procédure nécessite de détecter la direction du vent par l'intermédiaire d'une girouette électronique et de moduler le champ magnétique des bobines pour faire tourner le navire dans cette direction, puis à moduler différemment le champ magnétique des bobines de façon à faire croire au pilote que le bateau est orienté dans sa direction de consigne. Le bateau reste alors orienté fixement dans la direction du vent et s'immobilise voiles fasseyantes.

### EXEMPLES D'UTILISATION DE L'INVENTION

Il apparaît clairement que le système de sécurité à bord d'un navire selon l'invention peut s'adapter à la plupart des configurations de navire en choisissant les modes d'actions adaptés à chaque configuration de navire.

On peut distinguer typiquement quatre configurations et quatre scénarios de déroulement de la procédure de détresse.

### 1. Scénario N°1 - Bateau à voile en solitaire

Dans le cas d'utilisation en solitaire, en cas de chute du navigateur à la mer, il n'est pas nécessaire d'enregistrer et d'afficher les données de position à bord du navire, ni de déclencher une alarme de bord.

Par contre, il est fondamental de larguer une balise de localisation et de survie selon l'invention et de déclencher automatiquement une alerte de détresse sur le Canal Standard C du système INMARSAT ou par Appel Sélectif Numérique (DSC) dans le cadre du SMDSM pour déclencher l'envoi des secours ou l'arrivée d'autres navires sur la zone.

Les secours connaissent alors la position d'origine du sinistre et peuvent interroger la balise par les moyens radios pour réactualiser la position précise de la balise. Alternativement, les secours peuvent rechercher et repérer la balise par balayage radar.

Il est capital aussi de stopper le voilier.

Le système de sécurité en mer selon l'invention doit alors être configuré pour agir sur les bobines du compas magnétique, soit pour maintenir le voilier en trajectoire circulaire stationnaire, soit pour mettre le voilier "à la cape".

### 2. Scénario N°2 - Bateau à moteur en solitaire

Ce cas est semblable au précédent à ceci près que le système doit être configuré pour couper le moteur automatiquement.

### 3. Scénario N°3 - Navire à équipage perdant un membre d'équipage

Les navires à équipage, qu'il soit à moteur (navire de pêche, marine marchande...) ou à voile (voiliers de course) sont naturellement trop lourds pour que leur trajectoire soit détournée automatiquement et brusquement.

Il n'est pas conseillé dans ces conditions d'agir sur le compas magnétique d'un pilote automatique, ni de couper le moteur.

Les actions fondamentales dans ce cas, consistent à enregistrer et afficher les données de position du naufrage, à déclencher une alarme à bord et à larguer la balise de localisation et de survie selon l'invention.

Les autres navigateurs de l'équipage alertés ou réveillés peuvent alors connaître la position du naufrage, notamment en la visualisant sur un écran de cartographie et en affichant les données de position, soit sous forme de coordonnées en latitude et longitude, soit sous forme d'indications précises de cap et de distance.

Les données de position sont ensuite réactualisées au fur et à mesure de la réception des messages radios successifs de la balise.

L'alerte selon l'invention, est malgré tout déclenchée automatiquement dès la détection d'une absence de réception d'un appareil portatif individuel. Il est prévu alors que l'équipage peut désactiver sur commande les émissions d'alerte de détresse une fois qu'un autre navigateur a pris en charge la procédure de détresse ou a retrouvé ne naufragé.

### 4. Scénario N°4 - Naufrage du navire et/ou l'équipage

Il est prévu de déclencher une procédure de détresse également en cas de détection d'une avarie au navire, notamment en cas de détection d'une montée de niveau d'eau à l'intérieur du navire ou de détection d'attitude excessive du navire (mouvements, gîte, roulis hors limites).

Dans ce scénario, la ou les balises de localisation et de survie sont automatiquement larguées, ainsi que le ou les containers, et on déclenche l'émission d'une alerte de détresse générale via le Canal Standard C du système INMARSAT et/ou l'Appel Sélectif Numérique ; ceci avant que le système devienne incapable d'émettre.

Il apparaît bien que le déclenchement d'une alerte de détresse dès la détection d'un sinistre est préférable pour l'éventualité d'un grave sinistre, comme la disparition d'un navire.

Il apparaît d'autre part, que le système de sécurité à bord d'un navire peut s'adapter à chaque configuration de navire et peut être mis en oeuvre avantageusement sous forme d'un dispositif de sécurité en mer universel comportant toutes les fonctions précitées, le dispositif universel pouvant avantageusement être configuré en fonction de l'utilisation envisagée.

### DESCRIPTION DETAILLEE DU MODE DE REALISATION PREFERE DE L'INVENTION

Le diagramme de la figure 1 montre que le système de sécurité en mer selon l'invention peut être mis en oeuvre en réalisant un dispositif central "Radio Receiver Monitor" constituant un dispositif de radiomonitoring selon l'invention, le dispositif étant associé à au moins un appareil portatif individuel et à au moins une balise radioémettrice de localisation et de survie.

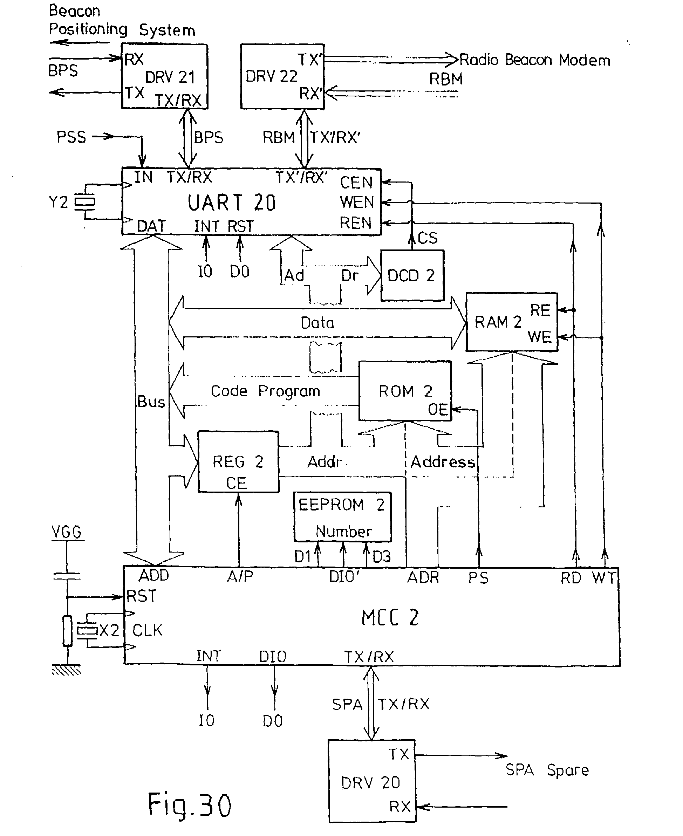

Le ou les appareils portatifs individuels comportent un module d'unité centrale CPU dont le mode de réalisation préféré est détaillé sur la figure 30. Le Module d'unité centrale est relié à un modem émetteur/récepteur radio. L'ensemble module CPU et modem radio est avantageusement alimenté par des batteries d'accumulateurs.

Il est prévu un dispositif de charge "Chargor" permettant de recharger les accumulateurs "Accumulators" des appareils portatifs individuels "Individual Apparatus". Le dispositif de charge est avantageusement relié et contrôlé avec le dispositif central de radiomonitoring.

Le dispositif de sécurité "Radio Receiver Monitor" comporte essentiellement un module d'Unité Centrale de Traitement CPU contrôlant toutes les transmissions du système de sécurité.

Conformément aux modes d'actions décrites précédemment, le module d'Unité Centrale CPU est relié en premier lieu à un appareil GPS de Système de calcul de Positionnement sur le Globe terrestre par liaison avec un réseau de Satellites.

Le dispositif est relié en second lieu à une alarme du bord, à une installation de station du navire d'émissions d'appel de détresse sur le Canal Standard C du système INMARSAT, à des bobines "Coils" disposées auprès du compas magnétique d'un système de pilotage automatique, ainsi qu'à des équipements de bord du navire "Navigation Equipments". Le dispositif "Monitor" est notamment relié à au moins un dispositif de largage d'une balise selon l'invention comme illustré figure 3B, à des moyens d'affichage de données de position ou à un ordinateur de bord, de préférence doté d'un écran et de moyens de cartographie numérique.

Le dispositif "Monitor" comporte encore un petit modem émetteur/récepteur radio destiné à recevoir les signaux radios de chaque appareil radioémetteur individuel, ainsi qu'un modem émetteur/récepteur de plus forte puissance à destination de la balise radio de localisation et de survie, les deux modems étant commandés par le module CPU.

Le petit modem radio en liaison avec les appareils individuels, est relié à des antennes disposées à l'intérieur et à l'extérieur du navire.

Il est prévu d'équiper le navire avec un ensemble d'antennes couvrant toutes les zones du navire pour ne laisser aucune zone d'ombre, et éviter de déclencher des alarmes intempestives si un navigateur et son appareil radio émetteur se trouvaient dans une zone d'ombre.

D'autre part, le dispositif "Monitor" comporte un puissant modem radio émetteur/récepteur relié à une antenne radio UHF disposée en tête de mât ou en partie haute du navire pour établir les liaisons radios avec la ou les balises radio de localisation et de survie larguées en mer.

L'ensemble du dispositif "Monitor" est relié à l'alimentation générale du navire.

Des moyens de convertisseurs d'alimentation de tension continue sont prévus pour alimenter séparément les diverses cartes électroniques des modules du dispositif.

Le mode de réalisation préféré des convertisseurs d'alimentation des différentes unités du dispositif de sécurité est détaillé sur la planche 13.

Les alimentations séparées permettent avantageusement de mettre certaines cartes au repos et d'autres en veille, de façon à pouvoir réactiver chaque fonction dès que cela est nécessaire.

La figure 1B montre une vue schématique de la balise radioémettrice de localisation et de survie qui est donc en liaison avec le dispositif de radiomonitoring par l'intermédiaire du puissant modem radio émetteur/récepteur et de son antenne lorsqu'elle est en service.

La balise selon l'invention comporte essentiellement un appareil GPS associé avec des moyens de transmissions radio qui sont formés par un module d'unité centrale et un modem radio Etnetteur/récepteur. L'ensemble est alimenté par une batterie de piles.

La balise comporte une alimentation par piles aptes à être stockées pendant une longue durée sans décharge, notamment plus de deux ans, conformément aux préconisations de l'Organisation Maritime Internationale et aux règlements maritimes nationaux.

La balise s'active automatiquement lorsqu'elle est larguée.

Pour pouvoir fonctionner dans une eau à basse température et fournir l'énergie électrique nécessaire à l'alimentation du GPS, de l'Unité Centrale CPU, du feu à éclats et éventuellement du transpondeur radar, pendant une durée de l'ordre d'une à quelques dizaines d'heures, on a prévu de doter la balise de piles au Lithium "Lithium Cells".

Il faut généralement attendre quelques dizaines de secondes à quelques minutes pour que le GPS fournisse les données de position.

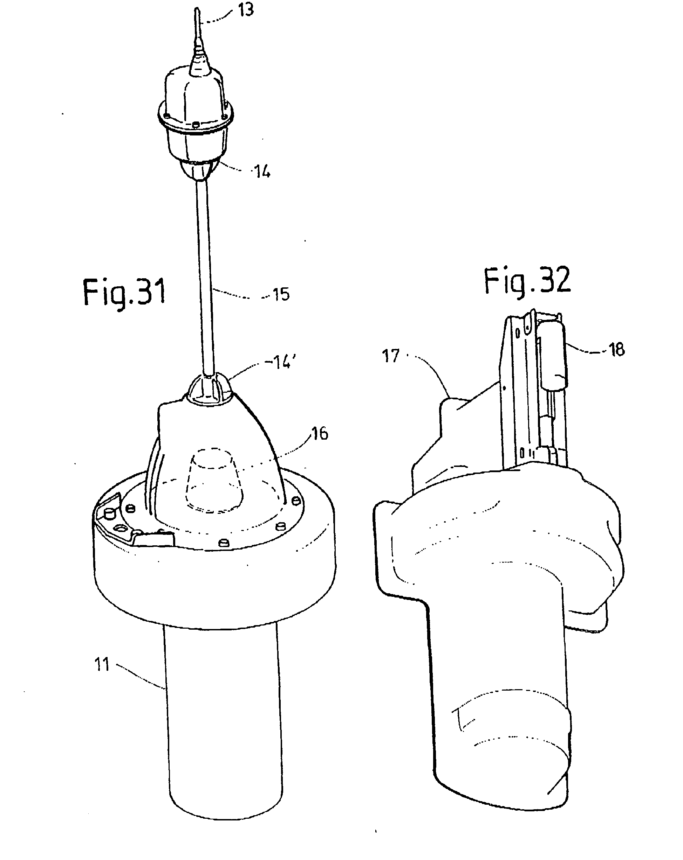

Il est prévu d'autre part que la balise est équipée d'un transpondeur radar 4, comme visible sur les figures 1B, 2, 3A ou de réflecteurs radar 14 et 14' comme illustré figure 31. Le transpondeur radar offre l'intérêt de permettre de repérer la position de la balise en cas de défaut de la liaison radio ou de défaut de fonctionnement du GPS.

Le transpondeur radar 4 peut aussi avantageusement donner un signal d'identification selon les recommandations de l'O.M.I..

Enfin, la balise est équipée d'un feu à éclat intermittent de type halogène à longue portée permettant avantageusement au naufragé de la repérer et de la rejoindre en mer, en particulier de nuit.

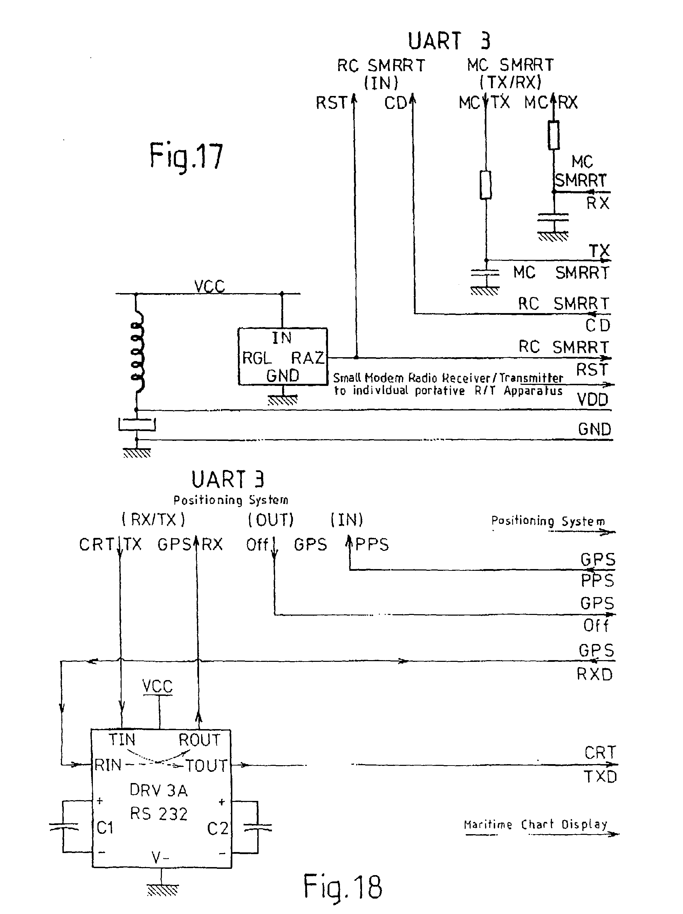

Le module d'unité centrale dont le mode de réalisation préféré est détaillé sur la figure 17 est apte à retransmettre les données précises de positionnement de la balise communiquées selon le protocole standard NMEA0183 par l'appareil de positionnement global par satellites (GPS).

De préférence, il est prévu que le dispositif "Monitor" embarqué à bord du navire envoie un signal radio d'identification pour que la balise réponde en retournant ses données précises de position dans un message radio à l'attention du dispositif "Monitor" de son navire d'origine ou de tout autre navire équipé d'un dispositif similaire.

Avantageusement, les émissions de signal radio de la balise contiennent des données d'identification, tel qu'un numéro MMSI, du système mondial maritime d'identification.

On peut également prévoir que les transmissions radios entre la balise et son navire sont protégées par des codes d'identifications.

Selon le mode de réalisation préféré de la balise illustré figure 30, le module d'unité centrale CPU comporte un microcontrôleur MCC2 apte à stocker des données d'identifications, notamment un numéro MMSI, dans une mémoire non volatile effaçable électriquement EEPROM2. Le module d'unité centrale de la balise comporte classiquement une mémoire morte ROM2 pour stocker son programme de réception de données précises de position du Système de Positionnement de la balise BPS, les routines de transmissions de signaux d'interrogation radio et de réponse radio.

La liaison radio entre la balise et le dispositif "Monitor" est de préférence établie en ondes à ultra haute fréquence (UHF) ou en micro-ondes.

Avantageusement, on a choisi d'utiliser la bande de fréquences autour de 868 MégaHertz et la bande de fréquences autour de 869 MégaHertz selon les pays, ce qui permet d'émettre librement à forte puissance.

Une puissance de l'ordre d'une à plusieurs centaines de milliwatts est en effet nécessaire pour établir une liaison radio à longue portée, de l'ordre d'un mille à une dizaine de milles nautiques (environ 2 km à 20 km), ce qui convient pour l'application. D'autres bandes d'ondes, notamment à très haute fréquence VHF peuvent être choisies également.

La balise radio de localisation et de survie contient donc comme indiqué figure 1B un modem radio émetteur/récepteur relié à une antenne radio, adaptées aux ondes UHF de préférence.

Comme illustré sur les figures 2 et 3a, l'antenne radio est de préférence disposée à la pointe d'un mât monté sur la balise et s'élevant de l'ordre d'un demi-mètre à deux mètres au-dessus du niveau de flottaison de la balise.

Cette disposition des antennes en position surélevée et à distance de l'eau est nécessaire pour développer efficacement la portée des liaisons radios entre la balise et le navire.

De préférence les transmissions de la balise sont effectuées par liaison série par l'intermédiaire d'une unité arithmétique de réception et de transmission UART 20 en utilisant ses ports de transmission/réception TX/RX.

La réception des données de position du Système de Positionnement de la balise BPS est effectuée par exemple par liaison série RS232 comme l'illustre le pilote d'interface DRV21. Les transmissions des messages radios entre la balise et le navire sont effectuées par un modem radio de la balise RBM, notamment via une transmission par un pilote d'interface DRV22 permettant d'établir une liaison série RS422 de bonne qualité. On laisse une ligne de transmission série TX/RX libre en sortie basse du microcontrôleur MCC2.

La figure 3A montre une première forme de réalisation de la balise flottante de localisation et de survie, sur laquelle on voit le feu à éclat 6 dans un logement à colonnettes surmonté d'un radôme pour loger une antenne GPS hémisphérique. Le radôme est surmonté par un mât d'antenne 3 comportant une hune 4 de logement du transpondeur.

Sur la figure 3B, on voit la balise montée dans son dispositif de largage automatique 7, constitué par une enveloppe sur lequel est montée un vérin hydraulique 8 commandable électriquement à distance, pour relâcher la balise.

Le dispositif de largage 7,8 est destiné à être commandé par le dispositif de radiomonitoring "Monitor" visible figure 1A.

L'unité centrale du dispositif de radiomonitoring est destinée à coordonner toutes les opérations de radiosurveillance, d'identification, de scrutation et de détection d'absence, ainsi que les actions consécutives d'enregistrement de position GPS, de déclenchement d'alarme, de largage d'une balise et de déclenchement d'une émission d'une alerte de détresse comme exposé dans la procédure précédente.

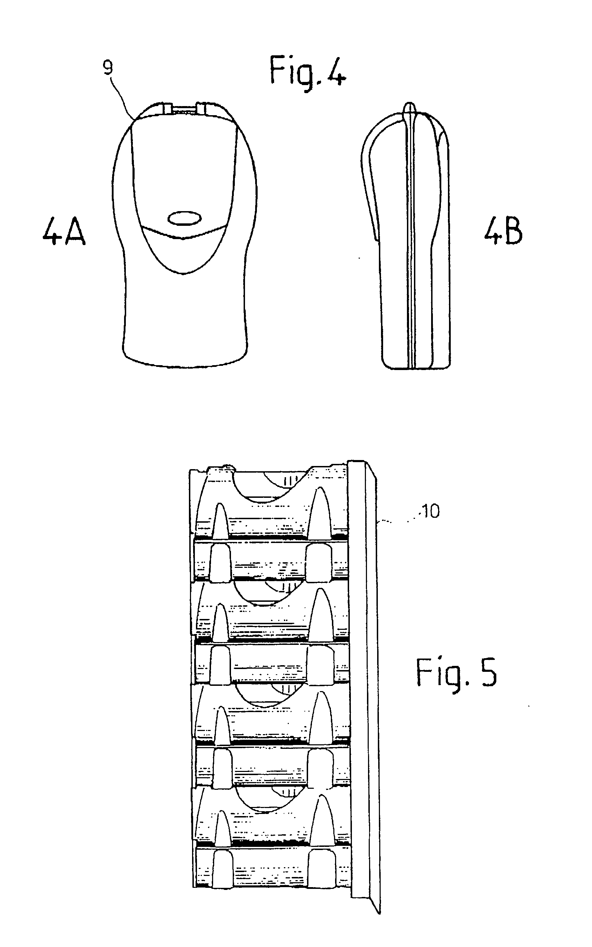

La figure 4 illustre le mode de réalisation préféré de l'unité centrale CPU de la figure 1A. Le module d'unité centrale du dispositif de radiomonitoring "Monitor" comporte en premier lieu un microcontrôleur MCC apte à mettre en oeuvre un programme stocké en mémoire morte ROM et à échanger des données "Data" par l'intermédiaire du bus. de données "Bus" avec sa mémoire vive RAM. Le bus de données du microcontrôleur MCC est relié aussi à un écran d'affichage "Position Display", de type affichage alphanumérique à LCD, par exemple, et à un ensemble d'unités arithmétiques de réception/transmission UART1, UART2, UART3 pour contrôler tous les équipement associés au dispositif de radiomonitoring selon l'invention.

Le microcontrôleur stocke des numéros d'identification de chaque appareil portatif individuel en service dans la mémoire EEPROM.

En fonctionnement normal, l'unité centrale du dispositif de radiomonitoring scrute la réception des signaux radios d'identification par l'intermédiaire du petit modem radio émetteur/transmetteur SMART.

Le modem SMRRT non représenté est d'un type disponible dans le commerce.

Comme illustré figure 4, la transmission de données du modem est effectuée sur un port TX/RX d'émission/réception. Le modem SMRRT peut envoyer des signaux de commande sur le port IN de l'interface QUART3. Le modem SMRRT peut être réinitialisé par des moyens d'initialisation RST en cas de coupure d'alimentaion comme détaillé figure 17.

Conformément au procédé présenté précedement, le microcontrôleur MCC du dispositif "monitor" surveille la réception régulière des signaux radios transmis par le modem SMRRT.

En fait, il est prévu que le microcontrôleur interroge tour à tour chaque appareil portatif individuel qui n'est pas au repos et qui n'a pas été identifié sur le dispositif de charge CHG.

Le microcontrôleur MCC stocke en mémoire rémanente EEPROM les numéros d'identification des appareils.

Dans chaque message d'interrogation le microprocesseur MCC communique un numéro d'identification pour interroger l'appareil identifié.

L'appareil dont le numéro d'identification correspond répond normalement par un message de réponse contenant son numéro d'identification.

De façon avantageuse, ce protocole d'échange de messages radios avec interrogation évite des confusions. Le protocole d'identification évite le déclenchement d'alertes intempestives en cas de parasitage quand le navire est au port par exemple.

En cas d'absence de réponse ou d'erreur d'identification il est prévu que le microcontrôleur mémorise le numéro d'identification, mais ne déclenche pas immédiatement une procédure de détresse. Il mémorise toutefois les données de position précise communiquées par le GPS et poursuit le cycle d'interrogation des autres appareils portatifs individuels en service.

Au cycle d'interrogation suivant, le dispositif interroge seulement les appareils portatif dont il n'a pas reçu de signal ou d'identification correcte.

Au bout de trois cycles d'interrogations, si un appareil n'est toujours pas détecté le dispositif déclenche la procédure d'alerte.

Ainsi de façon avantageuse, le dispositif **caractérisé en ce que** le dispositif est apte à déclencher la procédure d'alerte de détresse et/ou l'alarme de bord, dans un intervalle de temps inférieur à cinq secondes.

En cas de détection d'absence d'au moins un appareil, le microcontrôleur peut immédiatement enregistrer les données fournies par l'appareil GPS par l'intermédiaire d'une liaison série selon le standard NMEA0183.

En se reportant sur la figure 18, on voit que les données du GPS sont reçues sur une ligne GPS RX en passant par un pilote d'interfaçage DRV3A de norme RS232.

Inversement, les données de position enregistrées peuvent immédiatement être retounrées à un écran de cartographie via un pilote DRV3 de liaison série RS232 pour être affichées sur un écran d'affichage numérique de carte marine.

Ainsi le dispositif de radiomonitoring est apte à scruter la présence d'un ou de plusieurs d'au moins un appareil radioémetteur portatif individuel, pour former un système de sécurité à bord d'un navire et permettre de détecter un naufrage d'un ou de plusieurs navigateurs à donner une alerte immédiate et à localiser avec précision (exactement) le naufrage, de manière à dépêcher des secours sans délai et à permettre un sauvetage rapide du ou des naufragés, le dispositif comprenant :
- des moyens de réception des signaux radio d'identification émis régulièrement par chaque appareil portatif individuel,
- des moyens pour scruter en permanence la réception régulière et l'identification des signaux radios émis par chaque appareil portatif individuel,
- des moyens pour détecter automatiquement toute absence de réception du signal radio d'au moins un appareil portatif individuel et,
- des moyens pour enregistrer automatiquement des données précises de position de naufrage (MOB) délivrés par un appareil de système de calcul de positionnement sur le globe terrestre par liaison avec un réseau de satellites (GPS), les données précises de position du naufrage (MOB) étant enregistrées (à compter) sensiblement dès l'instant de la détection d'absence de l'émission radio régulière d'au moins un appareil portatif individuel.

Il faut préciser qu'en cas de procédure d'alerte de détresse, le microcontrôleur est à même de déclencher toutes les actions que l'on a recencées précédemment par l'intermédiaire de ses interfaces UART.

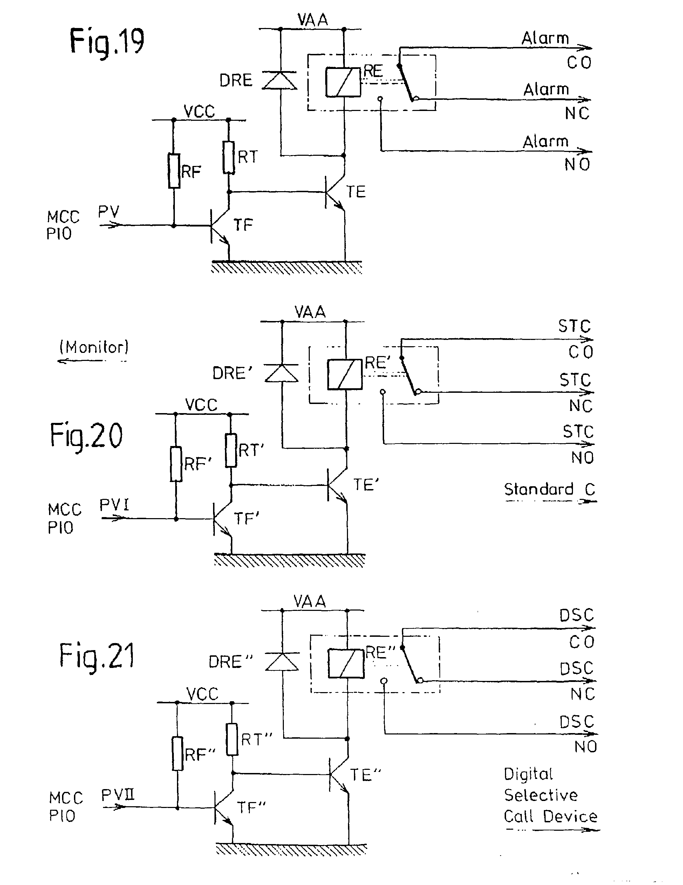

Le microcontrôleur actionne déjà l'alarme de bord en actionnant un relai, sur la ligne trois états Alarm CO/Alarm NC/Alarm NO par l'intermédiaire d'une commande PV sur son port d'entrée/sortie PIO. La commande PV actionne un étage à relai illustré figure 19.

L'alarme peut être sonore ou lumineuse.

Outre l'enregistrement des données émises par le GPS RX par le GPS le microcontrôleur peut connaître l'état du largueur en interrogeant des lignes reliées à des indicateurs d'état de largage STT, qui entrent sur le port IN de l'unité arithmétique UART2. Après avoir vérifié que le largueur est armé et contient bien une balise, le microcontrôleur MCC peut actionner le déclenchement du largage par la ligne "Jettissoning Trigger". On note au passage que le dispositif est apte à effectuer un contrôle de ces équipements et même d'effectuer une procédure d'autocontrôle.

La détection de l'état des largueurs se fait de préférence au moyen de lignes d'isolement statique par une série d'optocoupleurs OPT1 à OPT6. On voit encore que les lignes de mesures d'état 8TT de la balise peuvent être avantageusement des lignes trois états CMD2 Open/CM2 Close/Etat Indéterminé.

De même la commande CMD1 de largage en cas de procédure de détresse est effectuée de préférence au moyen de lignes trois états, CMD1 Open/CMD1 Close/Etat Indéterminé qui évitent une fausse manoeuvre.

Pour déclencher le largage de la balise le microcontrôleur transmet des signaux binaires de commande CMD 10 et CMD1I sur les lignes trois états via des optocoupleurs OPT3 et OPT4.

Le dispositif de radiomonitoring "Monitor" procède de préférence au largage d'un container en même temps en actionnant un second dispositif de largage "Jettissoning Device N°2" par l'intermédiaire d'un autre banc d'optocoupleurs OPT7 et OPT8 et vérifie l'état de largage avant/après.

De préférence, plusieurs paires de largueurs typiquement quatre largueurs avec deux paires de balises-containers sont montés à bord d'un navire en cas de naufrages successifs d'autres navigateurs.

Le dispositif comporte des moyens pour déclencher une procédure d'alerte de détresse, en cas de détection d'absence de réception d'un appareil portatif individuel ou à chaque détection d'absence de réception d'au moins un appareil portatif individuel.

Le dispositif de monitoring continue en effet à scruter la présence à bord des autres appareils portatifs.

La troisième action va consister à déclencher une alerte de détresse en formant ou en ouvrant en contract sec sur les bornes de l'installation de radioémissions d'alerte de détresse disposée à bord.

La commande de ces installations "Standard C" ou "Digital Selective Call Device" se fait de manière en tous points identiques au déclenchement de l'alarme. Les étages à relais qui actionnent le Standard C et le DSC sous la commande des commandes PVI et PVII du port DIO du microcontrôleur MCC est illustrée figures 20 et 21.

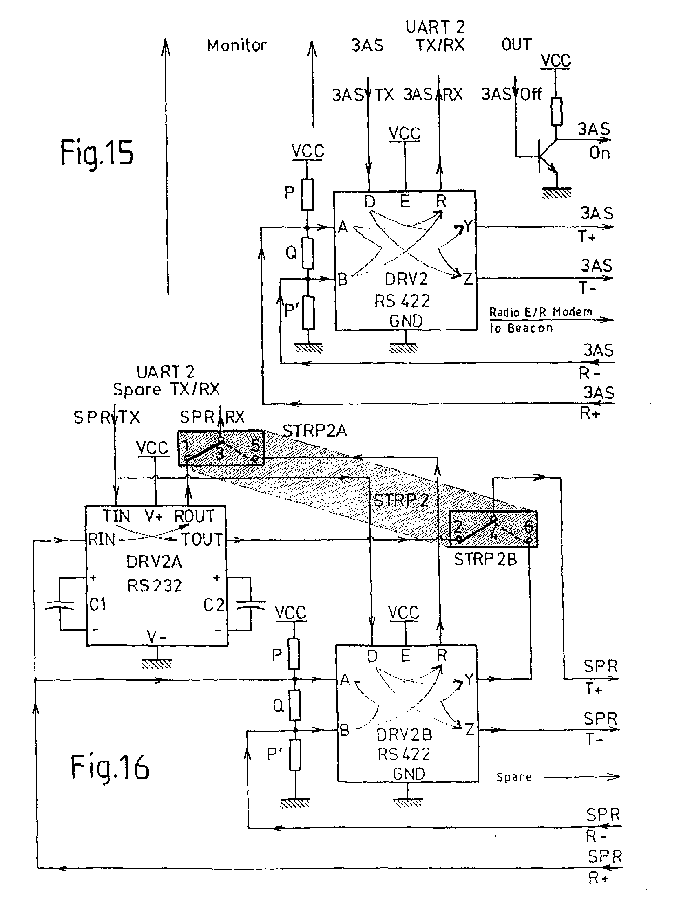

On notera encore qu'une ligne libre en réserve "Spare" a été prévue sur la carte CPU du dispositif de monitoring comme illustré en figures 4 et 16, la ligne étant prééquipée de moyens de communication série par liaison série RS232 ou RS242 par seimple modification de connexions STRP2.

De même, il est prévu une ligne NMEA de bus marine pour transmettre les données par liaison série aux équipements de bord, notamment un ordinateur du bord.

Finalement, en cas de détection d'absence d'un appareil portatif individuel, le dispositif de radiomonitoring est apte à :
- continuer à scruter en permanence, la réception et l'identification des signaux radio émis régulièrement par chacun des autres appareils portatifs individuels,
- détecter automatiquement toute autre absence de réception de l'émission régulière de signal radio d'au moins un autre appareil portatif individuel, et dans ce cas,
- enregistrer aussi automatiquement d'autres données précises de position du navire délivrées par l'appareil à bord de positionnement global par satellite (GPS) dès l'instant de la détection d'absence de réception d'un autre appareil portatif individuel, et
- redéclencher, le cas échéant l'alarme du bord.

Il est donc prévu des moyens pour enregistrer automatiquement l'identification de chaque appareil portatif individuel dont l'absence de réception a été détectée.

Le dispositif comporte en outre, des moyens pour enregistrer automatiquement l'heure et/ou calculer le temps écoulé à partir, de l'instant de détection de chaque absence de réception d'au moins un appareil portatif individuel.

Le dispositif comporte des moyens pour afficher les données précises de la position du naufrage ou position de chaque naufrage, enregistrées automatiquement, afin qu'un autre navigateur du bord déroute le navire et le dépêche sans retard sur la localisation précise du naufrage.

Le dispositif comporte en outre, des moyens pour afficher chaque identification enregistrée.

Le dispositif comporte en outre des moyens pour afficher l'heure enregistrée ou le temps écoulé calculé à chaque détection d'absence de réception d'un appareil portatif individuel, respectivement.

Le dispositif comprend en outre des moyens pour déclencher automatiquement au moins un largage d'une balise radio de localisation et de survie (BLS), en cas de détection d'une absence ou à chaque détection d'absence d'un appareil portatif individuel, respectivement.

Le dispositif comprend en outre des moyens pour déclencher automatiquement au moins un largage d'un container de sauvetage relié à une balise respective.

Le dispositif comprend en outre des moyens de radioréception et de démodulation permettant de recevoir des messages radios émis par une balise radio de localisation et de survie (BLS).

Le dispositif comprend des moyens pour extraire et enregistrer des données précises de positionnement de la balise contenues dans les messages radios successifs émis par la balise (BLS).

Le dispositif comprend des moyens de calcul différentiel apte à comparer les données précises de positionnement de la balise avec les données précises de positionnement du navire délivrées par l'appareil de calcul de Positionnement Global par Satellites (GPS) du bord, pour déterminer ultra-précisément la position de la balise par rapport au navire.

Le dispositif comporte des moyens pour réactualiser l'affichage des données de position de naufrage, en affichant les données précises de positionnement de la balise enregistrées successivement.

Avantageusemment les données de position de naufrage et/ou de positionnement de la balise ou de chaque balise, sont déterminées avec une précision en deçà d'une dizaine de mètres ou de l'ordre du mètre à une dizaine de mètres.

Le dispositif comprend des moyens d'affichage des données de position sous forme de coordonnées géodésiques.

Le dispositif comprend des moyens d'affichage des données de position sous forme d'indications précises de cap et de distance.

De préférence, les données précises de position sont transmises pour être affichées sur un écran de cartographie.

De préférence, les données de position sont transmises par liaison série de type RS232 ou RS422, selon le format standard NMEA0183.

Le dispositif comprend des moyens de transmission des données de position à destination d'un ordinateur de bord.

Le dispositif comprend des moyens de calcul apte à déterminer la route à suivre (TRK) et/ou les points de passage (WPT) jusqu'à la position du naufrage (MOB) ou jusqu'à la position de la balise (BLS).

Le dispositif comprend des moyens pour communiquer la route à suivre (TRK) et/ou les points de passage (WPT) à un dispositif de pilotage automatique pour que le navire rejoigne automatiquement les lieux du naufrage.

Le dispositif comporte des moyens pour mettre automatiquement le navire en mouvement stationnaire, en cas de détection d'absence de réception d'au moins un appareil portatif individuel.

Le dispositif comporte des moyens pour activer et moduler un champ magnétique produit par un système de bobines magnétiques disposées autour d'un compas magnétique faisant partie d'un système de pilotage automatique de façon à dévier le compas sur une direction Nord ou Sud fictive, afin que le pilote automatique fasse décrire au navire une trajectoire circulaire stationnaire.

Le dispositif comprend des moyens pour activer et moduler un champ magnétique produit par des bobines disposées autour d'un compas magnétique faisant partie d'un système de pilotage automatique du navire pour dévier le compas sur un Nord ou un Sud fictif en fonction de la direction du vent, de façon à maintenir le navire en configuration de "voilier à la cape" face au vent, voiles fasseyantes, en position stationnaire.

Le dispositif comprend des moyens pour couper le fonctionnement d'un ou de moteurs du navire.

De façon avantegeuse, le dispositif comporte des moyens pour déclencher automatiquement une procédure d'Alerte de Détresse, comportant une activation, au moins, d'une installation de station radioélectrique à bord du navire, déclenchant au moins une émission d'une alerte de détresse dans le cadre d'un service de radiocommunications faisant partie du Système Mondial de Détresse et de Sécurité en Mer (SMDSM) selon les résolutions de l'Organisation Maritime Internationale (O.M.I).

Le dispositif comporte des moyens déclencher une émission radio d'alerte de détresse par Appel Sélectif Numérique (DSC) faisant partie du Système Mondial de Détresse et de Sécurité en Mer (SMDSM), selon les résolutions de l'Organisation Maritime Internationale (O.M.I.).

Avantageusement, l'émission d'alerte de détresse par Appel Sélectif Numérique (DSC) comporte des données de position enregistrées automatiquement au moment du déclenchement de la procédure de détresse, outre l'heure d'appel, l'indicatif d'appel, l'identité de la station du navire et d'éventuels autres codes.

Alternativement, le dispostif comporte des moyens pour déclencher l'émission d'une alerte de détresse via un satellite du réseau de satellites INMARSAT de l'Organisation INternationale de Télécommunications MARitimes par SATellites.

De préférence, l'émission d'alerte de détresse est effectuée en déclenchant une station terrienne du navire faisant partie du système à réseau de satellites INMARSAT, l'émission correspondant notamment au canal standard C et/ou aux capacités d'Appel de Groupe Amélioré (EGC) du Service d'Emission Coordonnées et de Réception Automatique de Renseignements sur la Sécurité Maritime ("Service SafetyNet International"), en particulier dans la bande de radiocommunications à 1,6 GHz.

Enfin, il est prévu que la procédure d'alerte de détresse est déclenchée en outre par un signal d'alarme délivré par un signal d'alarme délivré par un dispositif pour détecter automatiquement des avaries au navire, notamment de détecter une montée de niveau d'eau à l'intérieur du navire, de détercter un incendie à bord et/ou de détecter une attitude excessive du navire au moyen de capteurs.

Maintenant, le dispositif comprend aussi des moyens pour émettre des signaux radiofréquences d'interrogation destinés à chaque appareil individuel portatif.

Il est prévu que le dispositif comprend des moyens pour stocker des données d'identification, notamment un numéro d'identification correspondant à chaque appareil.

Le dispositif comprend des moyens pour reconnaître les données d'identification transmises par chaque appareil en réponse à chaque signal radiofréquence d'identification.

Avantageusement, les transmissions de signaux radiofréquence d'identification entre le dispositif et chaque appareil portatif individuel mettent en oeuvre un protocole de transmission sécurisé.

Il est prévu aussi que le dispositif comporte des moyens pour assigner des données d'identification propre, en particulier un numéro d'identification, à chaque appareil portatif individuel.

Avantageusement, les données d'identification propres à chaque appareil sont transmises par liaison série par l'intermédiaire d'un dispositif de charge des appareils portatifs individuels.

Enfin il est prévu que le dispositif cesse de scruter la réception régulière des signaux radios d'identification émis par un appareil portatif individuel lorsque ledit appareil portatif individuel est disposé sur un dispositif de charge.

## Revendications

1. Procédé pour la sécurité à bord d'un navire, permettant de détecter un naufrage d'un ou de plusieurs navigateurs, de donner une alerte et de localiser le naufrage, de manière à dépêcher des secours et à permettre un sauvetage rapide du ou des naufragés, le procédé mettant en oeuvre des étapes consistant à :
- équiper chaque navigateur ou au moins une partie des navigateurs à bord, d'un appareil radio-émetteur portatif individuel respectif, chaque appareil émettant régulièrement un signal radio d'identification,
- scruter, au moyen d'un dispositif de surveillance radio, la réception et l'identification des signaux radio émis régulièrement par chaque appareil portatif individuel,
- détecter automatiquement toute (une) absence de réception de l'émission régulière de signal radio d'au moins un appareil portatif individuel, et dans ce cas,
- enregistrer automatiquement des données de position du naufrage délivrées, à bord du navire, par un appareil de Système calcul de Positionnement sur le Globe terrestre par liaison avec un réseau de satellites, **caractérisé par** les étapes consistant à :
- en cas de détection d'absence de réception d'un appareil portatif individuel, larguer et activer automatiquement au moins une balise radio de localisation et de survie, la balise comprenant un corps flottant, un appareil de système de calcul de positionnement sur le globe terrestre par liaison avec un réseau de satellites, et un dispositif radio-émetteur apte à transmettre des messages radio contenant des données de position délivrées par l'appareil de calcul de positionnement.

2. Procédé selon la revendication 1, **caractérisé en ce qu'**il comporte une étape consistant à:
- afficher les données précises de position enregistrées automatiquement, afin qu'un autre navigateur du bord déroute le navire et le dépêche sans retard sur la localisation précise du naufrage.

3. Procédé selon l'une des revendications 1 ou 2, **caractérisé en ce qu'**il comporte une étape consistant à :
- larguer en outre un container flottant de sauvetage relié à la balise radio de localisation et de survie, le container flottant pouvant contenir notamment un canot de sauvetage, un pack de survie, un appareil émetteur-récepteur VHF et/ou un téléphone satellitaire.

4. Procédé selon la revendication 1 à 3, **caractérisé en ce que** la balise est équipée d'un transpondeur radar et par une étape supplémentaire consistant à :
- rechercher et repérer la localisation de la balise à distance au moyen d'un dispositif de balayage radar.

5. Procédé selon l'une des revendications 1 à 4, **caractérisé par** des étapes complémentaires consistant à :
- recevoir, à l'aide de moyens de radioréception, les messages radio émis par le dispositif de la balise, et,
- enregistrer successivement les données de positionnement contenues dans les messages de la balise.

6. Procédé selon la revendication 5, **caractérisé par** une étape complémentaire consistant à :
- comparer les données de position du navire, délivrées par l'appareil de calcul de positionnement global par satellites embarqué à bord du navire, avec les données de position de la balise, délivrées par l'appareil de calcul de position globale par satellites embarqué dans la balise pour déterminer par calcul différentiel la position de la balise par rapport au navire.

7. Procédé selon l'une des revendications 1 à 6, **caractérisé par** une étape complémentaire consistant à :
- réactualiser l'affichage des données de position du naufrage, en affichant les données de positionnement de la balise enregistrées successivement.

8. Procédé selon l'une des revendications 1 à 7, **caractérisé en ce que** l'affichage des données de position du naufrage et/ou de positionnement de la balise est effectué sous forme de coordonnées géodésiques.

9. Procédé selon l'une des revendications 1 à 8, **caractérisé en ce que** l'affichage des données de position est effectué sous forme d'indications de cap et de distance.

10. Procédé selon l'une des revendications 1 à 9, **caractérisé en ce que** les données de la position du naufrage et/ou des positions successives de la balise sont transmises et affichées sur un écran de cartographie d'un ordinateur de bord et **en ce qu'**on détermine, au moyen de l'ordinateur de bord, la route à suivre et/ou les points de passage jusqu'à la position du naufrage ou jusqu'à la position de la balise.

11. Procédé selon la revendication 10, **caractérisé en ce qu'**on communique la route à suivre et/ou les points de passage au pilote automatique pour que le navire rejoigne automatiquement les lieux du naufrage.

12. Procédé selon l'une des revendications 1 à 11, **caractérisé par** des étapes complémentaires, en cas de détection d'absence de réception d'un appareil portatif individuel, consistant à :
- déclencher automatiquement une procédure d'Alerte de Détresse, comportant une activation, au moins, d'une installation de station radioélectrique à bord du navire, déclenchant au moins une émission d'une alerte de détresse dans le cadre d'un service de radiocommunications faisant partie du Système Mondial de Détresse et de Sécurité en Mer selon les résolutions de l'Organisation Maritime Internationale.

13. Procédé selon la revendication 12, dans lequel la procédure d'alerte de détresse s'adresse à un service de radiocommunications spatiales et se **caractérise par** une étape consistant à :
- déclencher l'émission d'une alerte de détresse via un satellite du réseau de satellites INMARSAT de l'Organisation Internationale de Télécommunications Maritimes par Satellites.

14. Dispositif de surveillance radio destiné à scruter la présence d'au moins un appareil radio-émetteur portatif individuel, pour former un système de sécurité à bord d'un navire et permettre de détecter un naufrage d'un ou de plusieurs navigateurs, de donner une alerte et localiser le naufrage, de manière à dépêcher des secours, le dispositif comprenant :
- des moyens de réception des signaux radio d'identification émis régulièrement par chaque appareil portatif individuel,
- des moyens pour scruter la réception régulière et l'identification des signaux radios émis par chaque appareil portatif individuel,
- des moyens pour détecter automatiquement toute absence de réception du signal radio d'au moins un appareil portatif individuel et ainsi signaler un naufrage,
- des moyens pour enregistrer automatiquement des données de position de naufrage délivrées par un appareil de système de calcul de positionnement sur le globe terrestre par liaison avec un réseau de satellites, le dispositif étant **caractérisé en ce qu'**il comprend en outre des moyens pour déclencher automatiquement au moins un largage d'une balise radio de localisation et de survie comprenant un corps flottant, un appareil de système de calcul de positionnement sur le globe terrestre par liaison avec un réseau de satellites, et un dispositif radio-émetteur apte à transmettre des messages radio contenant des données de position délivrées par l'appareil de calcul de positionnement, en cas de détection d'une absence ou à chaque détection d'absence d'un appareil portatif individuel.

15. Dispositif selon la revendication 14, **caractérisé en ce qu'**il comprend en outre des moyens pour déclencher automatiquement au moins un largage d'un container de sauvetage relié à une balise.

16. Dispositif selon la revendication 15, **caractérisé en ce que** le container est relié à la balise par un filin.

17. Dispositif selon la revendication 16, **caractérisé en ce que** le filin a une longueur supérieure à 20 mètres.

18. Dispositif selon l'une des revendications 14 à 17, **caractérisé en ce qu'**il comprend en outre des moyens de radioréception et de démodulation permettant de recevoir des messages radios émis par la balise radio de localisation et de survie, et des moyens pour extraire et enregistrer les données de positionnement de la balise contenues dans les messages radios émis par la balise.

19. Dispositif selon la revendication 14 à 18 **caractérisé en ce qu'**il comprend des moyens de calcul différentiel apte à comparer les données de positionnement de la balise avec les données de positionnement du navire délivrées par l'appareil de calcul de Positionnement Global par Satellites du bord, pour déterminer la position de la balise par rapport au navire.

20. Dispositif selon l'une des revendications 14 à 19, **caractérisé en ce qu'**il comporte des moyens pour réactualiser l'affichage des données de position de naufrage, en affichant les données de positionnement de la balise enregistrées successivement.

21. Dispositif selon l'une des revendications 14 à 20, **caractérisé en ce qu'**il comprend des moyens d'affichage des données de position sous forme de coordonnées géodésiques.

22. Dispositif selon l'une des revendications 14 à 21, **caractérisé en ce qu'**il comprend des moyens d'affichage des données de position sous forme d'indications de cap et de distance.

23. Dispositif selon l'une des revendications 14 à 22, **caractérisé en ce que** les données de position sont transmises pour être affichées sur un écran de cartographie.

24. Dispositif selon l'une des revendications 14 à 23, **caractérisé en ce qu'**il comprend des moyens de transmission des données de position à destination d'un ordinateur de bord, des moyens de calcul apte à déterminer la route à suivre et/ou les points de passage jusqu'à la position du naufrage ou jusqu'à la position de la balise.

25. Dispositif selon l'une des revendications 14 à 24, **caractérisé en ce qu'**il comporte des moyens pour déclencher automatiquement une procédure d'Alerte de Détresse, comportant une activation, au moins, d'une installation de station radioélectrique à bord du navire, déclenchant au moins une émission d'une alerte de détresse dans le cadre d'un service de radiocommunications faisant partie du Système Mondial de Détresse et de Sécurité en Mer selon les résolutions de l'Organisation Maritime Internationale.

26. Dispositif selon l'une des revendications 14 à 25, **caractérisé en ce qu'**il comporte des moyens pour déclencher l'émission d'une alerte de détresse via un satellite du réseau de satellites INMARSAT de l'Organisation Internationale de Télécommunications Maritimes par Satellites.

27. Dispositif selon l'une des revendications 14 à 26, **caractérisé en ce qu'**il comporte des moyens pour assigner des données d'identification propre, en particulier un numéro d'identification, à chaque appareil portatif individuel, ces données d'identification étant transmises par liaison série par l'intermédiaire d'un dispositif de charge des appareils portatifs individuels.

28. Dispositif selon l'une des revendications 14 à 27, **caractérisé en ce que** le dispositif cesse de scruter la réception régulière des signaux radios d'identification émis par un appareil portatif individuel lorsque ledit appareil portatif individuel est disposé sur un dispositif de charge.

29. Système de sécurité à bord d'un navire permettant de détecter un naufrage d'un ou de plusieurs navigateurs, de donner une alerte immédiate et de localiser le naufrage, de manière à dépêcher des secours, le système comprenant au moins un appareil portatif individuel comprenant des moyens pour transmettre régulièrement un signal radiofréquence d'identification, en combinaison avec un dispositif de surveillance radio selon l'une des revendications 14 à 28, au moins une balise radioémettrice de localisation et de survie destinée à transmettre des signaux radios à l'attention d'un dispositif de surveillance, la balise comprenant :
- un corps flottant,
- un appareil de système de calcul de Positionnement sur le Globe terrestre par liaison avec un réseau de satellites et un dispositif radio-émetteur apte à transmettre des messages radios contenant des données précises de position délivrées par l'appareil de calcul de Positionnement Global par Satellites, **caractérisé en ce qu'**il comprend un dispositif de largage automatique de ladite balise commandé par le dispositif de surveillance radio pour déclencher automatiquement le largage d'au moins une balise radio de localisation et de survie, en cas de détection d'absence de signal d'identification d'un appareil portatif individuel.

## Claims

1. Method for the ensuring safety on board a vessel, allowing the detection of one or several seamen in distress, triggering an alarm and locating the seaman/seamen in distress so as to dispatch assistance for the rapid rescue of the seaman/seamen, consisting of several stages as follows:
- each crew member or at least some of the crew members are equipped with an individual portable radio-transmitter, each transmitter regularly emitting an identifying radio signal,
- permanently scanning, by means of a radio monitoring device, the reception and identification of the radio signals regularly transmitted by each individual portable transmitter,
- automatically detecting any (an) absence(s) of regular emitted radio signals from at least one individual portable device and, in this case,
- automatically recording the emitted position data for the seaman in distress delivered on board the vessel by a Global Positioning System connecting to a network of satellites, **characterized by** stages consisting in:
- if an individual portable equipment is not detected, the release and automatic activation at least one location and survival radio beacon, the beacon comprising a floating body, a Global Positioning System by link to a network of satellites, and a radio-transmitter able to transmit radio messages containing the position data delivered by the position calculation equipment.

2. Method according to claim 1, **characterized in that** it includes a stage consisting in:
- displaying the precise automatically recorded position data, so that another on-board crew member diverts the vessel and dispatches it without delay to the exact location of the seaman in distress.

3. Method according to one of claims 1 or 2, **characterized in that** it includes a stage consisting in:
- releasing a floating rescue container connected to the location and survival radio beacon, the floating container being capable of containing a lifeboat, a survival pack, a VHF transmitter-receiver and/or a satellite phone.

4. Method according to claim 1 to 3, **characterized in that** the beacon is equipped with a radar transponder and an additional stage consisting in:
- remotely seeking and locating the remote beacon by means of a radar sweeping device.

5. Method according to one of claims 1 to 4, **characterized by** additional stages consisting in:
- using radio reception means to receive the radio messages transmitted by the beacon, and,
- record successively the positioning data contained in the beacon messages.

6. Method according to claim 5, **characterized by** an additional stage consisting in:
- comparing the vessel position data delivered by the on-board satellites Global Positioning System with the beacon position data delivered by the beacon satellite-based Global Positioning System in order to determine the position of the beacon relative to the vessel using differential calculation.

7. Method according to one of claims 1 to 6, **characterized by** an additional stage consisting in:
- updating the display of the position of the seaman in distress by displaying the successively recorded beacon position data.

8. Method according to one of claims 1 to 7, **characterized in that** the display of the seaman in distress position and/or position of the beacon consists of geodetic coordinates.

9. Method according to one of claims 1 to 8, **characterized in that** the position data is displayed in the form of heading and distance indications.

10. Method according to one of claims 1 to 9, **characterized in that** the position data for the seaman in distress and/or the successive positions of the beacon are transmitted and displayed on a cartographic monitor of an on-board computer and **in that** the route or the waypoints up to the position of the seaman in distress or the position of the beacon can be determined.

11. Method according to claim 10, **characterized in that** the route and/or the waypoints are communicated to the automatic pilot so that the vessel travels automatically to the position of the seaman in distress.

12. Method according to one of claims 1 to 11, **characterized by** supplementary stages for use if an individual portable equipment is not detected, consisting in:
- automatically triggering a distress alerting procedure, comprising the activation of at least one on-board radioelectrical station, triggering at least one distress alert as part of a radiocommunications service forming part of the World Distress Safety at Sea System based on the resolutions of the International Maritime Organization.

13. Method according to claim 12, in which the distress alerting procedure is sent to a spatial radiocommunication service and is **characterized by** a stage consisting in:
- automatic triggering of a distress alert via a satellite in the INMARSAT satellite network of the International Organization of Maritime Telecommunications by Satellites.

14. Radio monitoring device for scanning the presence of at least one portable individual radio-transmitter, forming an on-board vessel security system for detecting one or several seaman in distress, triggering an alarm and locating the seaman in distress in order to dispatch assistance, the device comprising:
- means for receiving the radio identification signals emitted regularly by each individual portable device,
- means for scanning the regular reception and identification of radio signals emitted by each individual portable device,
- means for automatic detection of any absence of the radio signal from at least one individual portable apparatus and thereby signalling a seaman in distress,
- means for automatically recording the position data for a seaman in distress delivered by a Global Positioning System connecting to a network of satellites, the device being **characterized in that** it includes moreover means for automatically triggering at least one release of a location and survival beacon comprising a floating body, a Global Positioning System by connecting to a network of satellites, and a radio-transmitter able to transmit radio messages containing the position data delivered by the Global Positioning System in the event of the detected absence or at each detected absence of reception from an individual portable transmitter.

15. Device according to the claim 14, **characterized in that** it also includes means for automatically triggering at least one release of a rescue container connected to a beacon.

16. Device according to claim 15, **characterized in that** the container is connected to the beacon by a rope.

17. Device according to claim 16, **characterized in that** the rope is more than 20 meters long.

18. Device according to one of claims 14 to 17, **characterized in that** it also includes radio reception and demodulation means maiming it possible to receive radio messages transmitted by the location and survival radio beacon, and means for extracting and recording the beacon positioning data contained in the radio messages transmitted by the beacon.

19. Device according to claim 14 to 18, **characterized in that** the means include the differential calculation means able to compare the beacon positioning data with the vessel positioning data delivered by the on-board satellite-based global positioning system in order to determine the position of the beacon relative to the vessel.

20. Device according to one of claims 14 and 19, **characterized in that** it comprises means for updating the display of the position of the seaman in distress by displaying the successively recorded beacon position data.

21. Device according to one of claims 14 to 20, **characterized in that** it comprises the means for displaying the position data in the form of geodesic coordinates.

22. Device according to one of claims 14 to 21, **characterized in that** it comprises the means for displaying the position data in the form of headings and distances.

23. Device according to one of claims 14 to 22, **characterized in that** the position data are transmitted for display on a cartographic monitor.

24. Device according to one of claims 14 to 23, **characterized in that** it comprises with means for transmitting the position data to an on-board computer, means for calculating the route to be followed and/or the waypoints up to the position of the seaman in distress or to the position of the beacon.

25. Device according to one of claims 14 to 24, **characterized in that** it comprises the means for automatically triggering a distress alert procedure comprising the activation of at least one electrically operated radio installation on board the vessel, triggering the emission of at least one distress alarm as part of a radio communication service forming part of the
Global Maritime Distress Safety System based on the resolutions of the international Maritime Organization.

26. Device according to one of claims 14 to 25, **characterized in that** it comprises means for triggering the emission of the distress signal via a satellite in the INMARSAT network of the international Mobile Satellite Organization.

27. Device according to one of claims 14 to 26, **characterized in that** it is comprises with means for assigning its own identification data, in particular an identification number, to each individual portable apparatus, these identification data being transmitted by a serial connection through a device for charging the individual portable apparatus.

28. Device according to one of claims 14 to 27, **characterized in that** the device ceases to scan regular reception scanning for identification signals emitted by an individual portable apparatus when the said individual portable apparatus is placed on a charging device.

29. System ensuring safety on board a vessel by enabling the detection of one or several seamen in distress, triggering an immediate alarm and the location of the seamen in distress so as to dispatch the emergency services, the system comprising at least one individual portable apparatus, the means for regularly transmitting an identification signal in combination with a radio monitoring device according to one of claims 14 to 28, at least one beacon emitting positioning and survival signals towards a monitoring device, the beacon comprising:
- a floating body,
- a Global Positioning System connecting to a network of satellites and a radio transmitter capable of transmitting radio messages containing accurate position data delivered by the satellite-based Global Positioning System computer, **characterized in that** it comprises a device for automatic release of the said beacon controlled by the radio monitoring device in order to automatically trigger the release of at least one survival and location radio beacon if an individual portable equipment is not detected.

## Patentansprüche

1. Verfahren zur Gewährleistung der Sicherheit an Bord eines Schiffes, das im Stande ist, das Über-Bord-Gehen einer oder mehrerer Personen zu erkennen, Alarm zu geben und die Unglücksstelle zu orten, so dass Bergungsmannschaften entsandt werden können und eine rasche Rettung der Person(en) möglich ist, welches folgende Verfahrensschritte umfasst:
- Ausrüstung aller oder zumindest eines Teils der an Bord befindlichen Personen mit tragbaren, individuellen Sendern, die in regelmäßigen Abständen Identifikationssignale aussenden,
- Überwachung des Empfangs und der Identifizierung der regelmäßig von jedem tragbaren, individuellen Gerät ausgesandten Funksignale mit Hilfe einer Funk-Überwachungseinrichtung,
- automatische Erkennung des Nichtempfangs eines oder aller der regelmäßig ausgesandten Funksignale mindestens eines der tragbaren individuellen Geräte, und in diesem Fall,
- die automatische Speicherung der Positionsdaten der über Bord gegangenen Person mit Hilfe eines an Bord des Schiffes befindlichen Gerätes mit Globalem Positionierungs-System in Verbindung mit einem Netzwerk von Satelliten, **gekennzeichnet durch** folgende Schritte:
- bei Erkennung des Nichtempfangs eines individuellen, tragbaren Geräts wird automatisch eine Notfunkbake abgeworfen und aktiviert, die einen Schwimmkörper, einen Rechner mit Globalem Positionierungs-System in Verbindung mit einem Satellitennetzwerk sowie eine Funkeinrichtung besitzt, mit der die vom Globalen Positionierungs-System gelieferten Positionsdaten durch Funksignale ausgesendet werden können.

2. Verfahren gemäß Patentanspruch 1, **gekennzeichnet dadurch, dass** es folgenden Schritt beinhaltet:
- Anzeige der automatisch gespeicherten, genauen Positionsdaten, damit eine andere Person an Bord den Kurs des Schiffes ändert und es unverzüglich an die genaue Unglücksstelle zurückführt.

3. Verfahren gemäß Patentanspruch 1 oder 2, **gekennzeichnet dadurch, dass** es folgenden Schritt beinhaltet:
- zusätzlicher Abwurf eines schwimmenden Rettungscontainers, der mit der Notfunk- und Rettungsbake verbunden ist, wobei der schwimmende Container insbesondere ein Rettungsboot, eine Überlebenstasche, ein VHF-Sende/Empfangsgerät und/oder ein Satellitentelefon enthalten kann.

4. Verfahren gemäß Patentanspruch 1 bis 3, **gekennzeichnet dadurch, dass** die Notfunkbake mit einem Radartransponder ausgerüstet und ein zusätzlicher Schritt vorgesehen ist, der darin besteht,
- die Position der Notfunkbake aus der Entfernung mit einer Radar-Abtastvorrichtung zu suchen und zu orten.

5. Verfahren gemäß einem der Ansprüche 1 bis 4, **gekennzeichnet durch** weitere Schritte, die darin bestehen,
- die von der Notfunkbake ausgesandten Funksignale mit Funkempfangsvorrichtungen zu empfangen und
- die in den Funksignalen der Notfunkbake enthaltenen Positionsdaten fortlaufend zu speichern.

6. Verfahren gemäß Patentanspruch 5, **gekennzeichnet durch** einen weiteren Schritt, der darin besteht,
- die Positionsdaten des Schiffes, die von dem an Bord des Schiffes installierten Gerät zur Berechnung der globalen Position par Satelliten geliefert werden, mit den Positionsdaten der Notfunkbake, die von dem in der Notfunkbake installierten Gerät zur Berechnung der globalen Position par Satelliten zu vergleichen, um **durch** Differenzbildung die Position der Notfunkbake in Bezug auf das Schiff zu berechnen.

7. Verfahren gemäß einem der Ansprüche 1 bis 6, **gekennzeichnet durch** einen weiteren Schritt, der darin besteht,
- die Positionsdaten des Verunglückten zu aktualisieren, in dem die fortlaufend registrierten Positionsdaten der Notfunkbake angezeigt werden.

8. Verfahren gemäß einem der Patentansprüche 1 bis 7, **gekennzeichnet dadurch, dass** die Positionsdaten des Verunglückten und/oder der Position der Notfunkbake in Form geodätischer Koordinaten angezeigt werden.

9. Verfahren gemäß einem der Patentansprüche 1 bis 8, **gekennzeichnet dadurch, dass** die Positionsdaten des Verunglückten und/oder der Position der Notfunkbake in Form geodätischer Koordinaten angezeigt werden.

10. Verfahren gemäß einem der Patentansprüche 1 bis 9, **gekennzeichnet dadurch, dass** die gesendeten Positionsdaten des Verunglückten und/oder der aufeinanderfolgenden Positionsdaten der Notfunkbake auf der Karte eines Bordcomputers angezeigt werden und dass man mit dem Bordcomputer den Kurs und/oder die Wegpunkte bis zur Position des Verunglückten oder der Position der Notfunkbake bestimmt.

11. Verfahren gemäß Patentanspruch 10, **gekennzeichnet dadurch, dass** der Kurs und/oder die Wegpunkte dem Autopiloten mitgeteilt werden, damit das Schiff automatisch den Verunglückten erreicht.

12. Verfahren gemäß einem der Patentansprüche 1 bis 11, **gekennzeichnet durch** weitere Schritte bei Nichtempfang der Signale eines individuellen, tragbaren Gerätes, bestehend darin,
- dass automatisch ein Notsignalverfahren ausgelöst wird, bei dem mindestens eine elektrische Funkeinrichtung an Bord des Schiffes aktiviert wird, die mindestens einen Notruf im Rahmen eines Funkkommunikationsdienstes absetzt, der entsprechend den Beschlüssen der International Maritime Organisation Teilnehmer im Global Maritime Distress Safety System ist.

13. Verfahren gemäß Patentanspruch 12, bei dem das Notrufverfahren mit einem Weltraum-Funkkommunikationsdienst arbeitet und durch einen Schritt **gekennzeichnet** ist, der darin besteht,
- dass ein Notruf über einen Satelliten des Satellitennetzwerks INMARSAT der International Maritime Satellite Organization ausgesendet wird.

14. Funküberwachungseinrichtung zur Detektion mindestens eines individuellen, tragbaren Funkgeräts, so dass an Bord eines Schiffes ein Sicherheitssystem gebildet wird, mit dem das über Bord gehen einer oder mehrerer Personen detektiert werden, ein Alarm gegeben und der Ort des Verunglückten bestimmt werden können, so dass Bergungskräfte entsandt werden können, wobei die Einrichtung aus folgenden Elementen besteht:
- Empfangseinrichtungen für die Identifikations-Funksignale, die in regelmäßigen Abständen von jedem individuellen, tragbaren Gerät ausgesandt werden,
- Einrichtungen zur Überwachung des regelmäßigen Empfangs und zur Identifizierung der Funksignale, die von jedem individuellen, tragbaren Gerät ausgesandt werden,
- Mitteln zur automatischen Detektion des Nichtempfangs des Funksignals mindestens eines individuellen, tragbaren Gerätes und zur darauf folgenden Signalisierung des über Bord Gehens.
- Mitteln zur automatischen Speicherung der Positionsdaten des Verunglückten, die von einem Gerät mit einem System zur Berechnung der Position auf der Erdoberfläche in Verbindung mit einem Satellitennetzwerk geliefert werden, wobei die Vorrichtung **dadurch gekennzeichnet ist, dass** sie außerdem Mittel zum automatischen Auslösen des Abwurfs mindestens einer Funkbake mit Schwimmkörper zur Ortung und Rettung besitzt sowie ein Gerät mit einem System zur Berechnung der Position auf der Erdoberfläche in Verbindung mit einem Satellitennetzwerk, und einer Funkvorrichtung, mit der die die Positionsdaten enthaltenden Funksignale gesendet werden können, die das Positionsberechnungsgerät liefert, wenn ein einmaliger oder mehrmaliger Nichtempfang des Signals eines individuellen, tragbaren Gerätes detektiert wird.

15. Vorrichtung gemäß Patentanspruch 14, **gekennzeichnet dadurch, dass** sie zusätzlich Mittel zum automatischen Auslösen mindestens eines Abwurfs eines mit einer Notfunkbake verbundenen Rettungscontainers besitzt.

16. Vorrichtung gemäß Patentanspruch 15, **gekennzeichnet dadurch, dass** der Container durch eine Leine mit der Notfunkbake verbunden ist.

17. Vorrichtung gemäß Patentanspruch 16, **gekennzeichnet dadurch, dass** die Leine länger als 20 Meter ist.

18. Vorrichtung gemäß einem der Patentansprüche 14 bis 17, **gekennzeichnet dadurch, dass** sie außerdem Mittel zum Empfang und zur Demodulation von Funksignalen besitzt, so dass sie die von der Notfunk-Ortungs- und Rettungsbake ausgesandten Funkdaten empfangen kann sowie Mittel zum Lesen und Speichern der Positionsdaten der Bake, die in den von der Bake ausgesandten Funksignalen enthalten sind.

19. Vorrichtung gemäß Patentanspruch 14 bis 18, **gekennzeichnet dadurch, dass** sie Mittel zur Differenzbildung enthält, um die Positionsdaten der Notfunkbake mit den Positionsdaten des Schiffes, die von dem an Bord installierten Gerät zur globalen Positionsbestimmung per Satelliten geliefert werden, zu vergleichen und die Position der Notfunkbake in Bezug auf das Schiff zu berechnen.

20. Vorrichtung gemäß einem der Patentansprüche 14 bis 19, **gekennzeichnet dadurch, dass** sie Mittel zum Auffrischen der Positionsdaten des Verunglückten besitzt, indem sie die fortlaufend gespeicherten Positionsdaten der Notfunkbake anzeigt.

21. Vorrichtung gemäß einem der Patentansprüche 14 bis 20, **gekennzeichnet dadurch, dass** sie Mittel zur Anzeige der Positionsdaten in Form geodätischer Koordinaten besitzt.

22. Vorrichtung gemäß einem der Patentansprüche 14 bis 21, **gekennzeichnet dadurch, dass** sie Mittel zur Anzeige der Positionsdaten in Form von Kurs und Entfernung besitzt.

23. Vorrichtung gemäß einem der Patentansprüche 14 bis 22, **gekennzeichnet dadurch, dass** die Positionsdaten zur Anzeige auf einer Computerbildschirmkarte übermittelt werden.

24. Vorrichtung gemäß einem der Patentansprüche 14 bis 23, **gekennzeichnet dadurch, dass** sie Mittel zur Übermittlung der Positionsdaten an einen Bordcomputer besitzt sowie Recheneinrichtungen, um den Kurs und/oder die Wegpunkte bis zur Position des Verunglückten oder der Notfunkbake zu bestimmen.

25. Vorrichtung gemäß einem der Patentansprüche 14 bis 24, **gekennzeichnet dadurch, dass** sie Mittel zum automatischen Auslösen eines Notsignalverfahrens besitzt, bei dem mindestens eine elektrische Funkeinrichtung an Bord des Schiffes aktiviert wird, die mindestens einen Notruf im Rahmen eines Funkkommunikationsdienstes absetzt, der entsprechend den Beschlüssen der International Maritime Organisation Teilnehmer im Global Maritime Distress Safety System ist.

26. Vorrichtung gemäß einem der Patentansprüche 14 bis 25, **gekennzeichnet dadurch, dass** sie Mittel zum Auslösen eines Notrufs über einen Satelliten des Satellitennetzwerks INMARSAT der Internationalen Organisation für maritime Satellitenkommunikation besitzt.

27. Vorrichtung gemäß einem der Patentansprüche 14 bis 26, **gekennzeichnet dadurch, dass** sie Mittel zur Zuweisung spezifischer Identifikationsdaten, insbesondere einer Identnummer, an jedes individuelle, tragbare Gerät besitzt, wobei diese Identifikationsdaten mit Hilfe einer Ladeeinrichtung für individuelle, tragbare Geräte über eine Serienleitung übertragen werden.

28. Vorrichtung gemäß einem der Ansprüche 14 bis 27, **gekennzeichnet dadurch, dass** die Vorrichtung die Überwachung des regelmäßigen Empfangs der von einem individuellen, tragbaren Gerät ausgesandten Identifikations-Funksignale einstellt, wenn das genannte individuelle, tragbare Gerät auf ein Ladegerät gesetzt wird.

29. Sicherheitssystem an Bord eines Schiffes zur Detektion des über Bord Gehens einer oder mehrerer Personen, das sofortige Auslösen eines Alarms und die Ortung des Verunglückten, so dass Bergungskräfte entsandt werden können, wobei das System mindestens ein individuelles, tragbares Gerät besitzt sowie Mittel zur regelmäßigen Übermittlung eines Identifikations-Funksignals in Kombination mit einer Funk-Überwachungseinrichtung gemäß einem der Patentansprüche 14 bis 28, mindestens einer Notfunk-Ortungs- und Rettungsbake, die dazu bestimmt ist, Funksignale an eine Überwachungsvorrichtung zu senden, wobei die Notfunkbake aus folgenden Elementen besteht:
einen Schwimmkörper,
ein Gerät mit einem System zur Berechnung der Position auf der Erdoberfläche in Verbindung mit einem Satellitennetzwerk sowie eine Funkeinrichtung, mit der Funksignale mit den genauen globalen Positionsdaten gesendet werden können, die von dem System zur globalen Positionsberechnung per Satellit geliefert werden,
**gekennzeichnet dadurch, dass** es eine automatische Abwurfeinrichtung für die Notfunkbake besitzt, die von der Funküberwachungsvorrichtung gesteuert wird, um den automatischen Abwurf mindestens einer Notfunk-Ortungs- und Rettungsbake auszulösen, wenn der Nichtempfang des Identifikationssignals eines individuellen, tragbaren Geräts detektiert wird.
